# EUROPÄISCHE PATENTSCHRIFT

(11) **EP 4 380 345 B1**
(45) Veröffentlichungstag und Bekanntmachung des Hinweises auf die Patenterteilung: **19.02.2025**
(21) Anmeldenummer: 22753998.8
(22) Anmeldetag: 03.08.2022
(51) Int. Cl.: A01B 51/02, A01B 79/00, A01B 79/02

(54) **VORRICHTUNG UND VERFAHREN ZUR BEWIRTSCHAFTUNG EINER LANDWIRTSCHAFTLICHEN NUTZFLÄCHE**
DEVICE AND METHOD FOR CULTIVATING AN AGRICULTURAL AREA
DISPOSITIF ET PROCÉDÉ DE CULTURE D'UNE ZONE AGRICOLE

(30) Priorität: 04.08.2021 DE 102021120341
(43) Veröffentlichungstag der Anmeldung: 12.06.2024
(73) Patentinhaber: AI.Land GmbH, 47906 Kempen (DE)
(72) Erfinder: FRANKO, Josef, 47906 Kempen (DE)
(74) Vertreter: Dammertz, Ulrich
(86) Internationale Anmeldenummer: PCT/DE2022/100562
(87) Internationale Veröffentlichungsnummer: WO 2023/011690

(56) Entgegenhaltungen:
- WO-A1-2017/106874
- CN-U- 211 020 084
- US-A- 4 590 739
- US-A- 4 704 851
- US-A1- 2011 252 760
- US-B2- 7 854 108

## Beschreibung

Die Erfindung betrifft eine Vorrichtung zur Bewirtschaftung einer landschaftlichen Nutzfläche nach dem Oberbegriff von Anspruch 1, und ein entsprechendes Verfahren, für das eine solche Vorrichtung verwendet werden kann.

Nach dem Stand der Technik ist es bekannt, landwirtschaftliche Nutzflächen mit Hilfe von selbstfahrenden Maschinen zu bearbeiten. Bei diesen Maschinen kann es sich um mobile autonome Feldroboter handeln, die mit eigenem Chassis bzw. Fahrwerk ausgerüstet sind und vergleichsweise kompakte Abmessungen aufweisen. Zwar sind solche Feldroboter bereits mit hoher Präzision einsatzfähig, jedoch unterliegen sie dem Nachteil von vergleichsweise großen Kosten, was einen kosteneffizienten Einsatz problematisch macht. Ein weiterer Nachteil ergibt sich dadurch, dass solche autonome bzw. selbstfahrende Feldroboter als Fahrzeug angesehen werden und insoweit vom Gesetzgeber in Deutschland hierzu strenge Restriktionen für deren Einsatz bestehen.

Selbstfahrende Maschinen können auch mit Portalsystemen in Form einer Traverse ausgestattet sein, wobei zumeist an beiden Enden der Traverse ein Fahrwerk mit Rollen angebracht ist, so dass damit die Traverse in Längsrichtung über den Boden bzw. die landwirtschaftliche Nutzfläche bewegbar ist. Beispielsweise ist aus AT 364659 B eine Einrichtung zum Bearbeiten einer landwirtschaftlich genutzten Fläche mit einem solchen Portalsystem in Form einer Brücke bekannt, die mittels auf Schienen laufenden Rädern quer zu ihrer Längserstreckung verfahren wird. Entlang der Brücke ist in Längsrichtung derselben eine Laufkatze verfahrbar, die als Geräteträger für eine Feldbearbeitungseinrichtung (z.B. zum Setzen von Pflanzen oder zum Jäten) dient.

Aus WO 2017/106874 A1 ist ein Verfahren zum Bewirtschaften einer landwirtschaftlichen Nutzfläche nach dem Oberbegriff von Anspruch 7 bekannt.

US 2011/252760 A1 zeigt eine Vorrichtung zum Bewirtschaften einer landwirtschaftlichen Nutzfläche, mit der Früchte, die in Reihen angebaut sind, automatisch geerntet werden können. Zu diesem Zweck umfasst die Vorrichtung eine Rahmeneinrichtung, die mit daran angebrachten Rädern autonom über die landwirtschaftliche Nutzfläche verfahren werden kann. An der Rahmeneinrichtung sind bewegliche Roboterarme angebracht, mit denen Früchte im Zuge der Ernte von der landwirtschaftslichen Nutzfläche gesammelt und dann in Kisten bzw. Behälter eingebracht werden.

Der Erfindung liegt die Aufgabe zugrunde, die Bearbeitung von landwirtschaftlichen Nutzflächen mit einfachen Mitteln zu optimieren und effizienter zu gestalten.

Diese Aufgabe wird durch eine Vorrichtung mit den Merkmalen von Anspruch 1 und durch ein Verfahren mit den Merkmalen von Anspruch 7 gelöst. Vorteilhafte Weiterbildungen der Erfindung sind in den abhängigen Ansprüchen definiert.

Eine Vorrichtung gemäß der vorliegenden Erfindung dient zur Bewirtschaftung einer landwirtschaftlichen Nutzfläche, und umfasst zumindest eine längliche Traverse und ein zugeordnetes Fahrwerk mit zumindest einem Rad, mit dem die Traverse kreisförmig oder linear über die Nutzfläche verfahrbar ist, und zumindest eine Feldbewirtschaftungseinrichtung, die entlang der Traverse beweglich bzw. verfahrbar ist. Die Vorrichtung umfasst des Weiteren zumindest eine Kiste, vorzugsweise eine Mehrzahl von solchen Kisten, und ein Fördersystem, das an der Traverse entlang von deren Längserstreckung vorgesehen ist. Die Vorrichtung umfasst des Weiteren eine Mehrzahl von an der Traverse vorgesehenen Laufkatzen, die an zugeordneten Führungsschienen der Traverse angebracht und somit entlang der Traverse in Richtung von deren Längserstreckung beweglich sind, wobei an einer jeweiligen Laufkatze zumindest eine Feldbewirtschaftungseinrichtung angebracht ist und somit die Laufkatzen jeweils als Geräteträger für eine Feldbewirtschaftungseinrichtung dienen. Zumindest eine Kiste kann mit dem Fördersystem entlang der Längserstreckung der Traverse in eine bestimmte Richtung bewegt und damit an eine vorbestimmte Position insbesondere angrenzend zu einer Feldbewirtschaftungseinrichtung gebracht werden. Dies ist zweckmäßigerweise auch für eine Mehrzahl von Kisten möglich, die mit dem Fördersystem entlang der Längserstreckung der Traverse bewegbar sind. An zumindest einer Laufkatze sind gleichzeitig verschiedene Typen von Feldbewirtschaftungseinrichtungen montiert, wobei somit die Laufkatze als Geräteträger für diese verschiedenen Typen von Feldbewirtschaftungseinrichtungen dient. Die Mehrzahl von Laufkatzen mit zumindest einer daran angebrachten Feldbewirtschaftungseinrichtungen sind an entgegengesetzten Seiten der Traverse vorgesehen.

Im Sinne der vorliegenden Erfindung ist unter dem Merkmal einer "Kiste" ein jedwedes Behältnis zu verstehen, das sich zur Aufnahme von Erntegut bzw. Früchten eignet. Eine solche Kiste kann als Erntekiste, Pflanzkiste, Gewächskiste oder dergleichen ausgebildet sein. Zweckmäßigerweise können an zwei gegenüberliegenden Seiten einer solchen Kiste Griffe oder dergleichen vorgesehen sein, mit denen eine solche Kiste ergriffen werden kann. Eine solche Kiste kann zweckmäßigerweise aus Kunststoff oder Holz bestehen, oder alternativ auch aus (Leicht-)Metall, z.B. Aluminium. Jedenfalls ist das Material, aus dem eine solche Kiste gemäß der vorliegenden Erfindung besteht bzw. gebildet ist, ausreichend stabil gewählt, damit sowohl ein Anheben einer solchen Kiste von Hand gewährleistet ist, wenn diese mit Erntegut gefüllt ist, als auch ein Kontakt einer Mehrzahl von benachbarten Kisten auf einem Rollgang oder dergleichen möglich ist, ohne dass es dabei zu einem Ausbeulen oder gar zu einer Rissbildung in den Seitenwangen der Kisten kommt.

Ergänzend wird an dieser Stelle darauf hingewiesen, dass im Sinne der vorliegenden Erfindung die Begriffe "Kiste" und "Behälter" synonym zu verstehen sind. Des Weiteren kann eine Kiste bzw. ein Behälter in den Eckbereichen auch gerundet oder gar rund ausgebildet sein.

Der "Pfiff" der erfindungsgemäßen Vorrichtung liegt darin, dass es mit dem Fördersystem möglich ist, zumindest eine Kiste an eine vorbestimmte Position entlang der Traverse zu bringen bzw. zu bewegen. Zu diesem Zweck kann das Fördersystem entweder ein umlaufendes Förderband und/oder einen Rollgang aufweisen, auf dem bzw. den eine Kiste aufgesetzt werden kann. Die besagte vorbestimmte Position, an welche die Kiste mit dem Fördersystem gebracht werden kann, befindet sich insbesondere angrenzend zu einer Feldbewirtschaftungseinrichtung, die an der Traverse angebracht bzw. vorgesehen ist. Falls sich nämlich eine Kiste entlang der Traverse an einer solchen Position angrenzend zu einer Feldbewirtschaftungseinrichtung befindet, ist es möglich, dass von der Feldbewirtschaftungseinrichtung entweder Samen, Setzlinge oder dergleichen aus der Kiste herausgenommen werden, um damit anschließend eine weitere Bewirtschaftung auf der landwirtschaftlichen Nutzfläche vorzunehmen, oder dass im Zuge einer Ernte Erntegut oder dergleichen zurück in die Kiste übergeben wird.

In gleicher Weise sieht die Erfindung auch ein Verfahren zum Bewirtschaften einer landwirtschaftlichen Nutzfläche vor, bei dem die vorstehend genannte erfindungsgemäße Vorrichtung eingesetzt werden kann. Jedenfalls ist für ein solches Verfahren charakteristisch, dass es vollautomatisch durchgeführt wird und Arbeitsschritte bzw. pflanzenbauliche Prozessschritte von der Ein- bzw. Aussaat der Pflanzen bis zu deren Ernte umfasst, wobei im Zuge der Ernte eine vorbestimmte Menge von Erntegut, ggf. auch von verschiedenen Pflanzen, maschinell in eine hierzu vorgesehene Kiste eingebracht wird. Das Verfahren ist weiterhin dadurch charakterisiert, dass auf der gleichen landwirtschaftlichen Nutzfläche verschiedene Pflanzen in Form eines gemischten Anbaus eingesät bzw. geerntet werden, wobei pflanzenbauliche Anbau- und Ernteprozesse als Pick-and-Place Prozesse abgebildet werden und diese Pick-and-Place Prozesse kulturübergreifend, d.h. für verschiedene Arten und Größen von Gemüsepflanzen durchgeführt werden, wobei beim Einbringen der Ernte mittels einer Feldbewirtschaftungseinrichtung das Erntegut von unterschiedlichen Arten von Pflanzen zusammen in eine gemeinsame Kiste eingebracht wird. Weiterhin ist für dieses Verfahren charakteristisch, dass auf der landwirtschaftlichen Nutzfläche eine Punkt-Bewirtschaftung realisiert wird, bei der eine Bewirtschaftung der Nutzfläche sich lediglich auf gezielte Pflanzpunkte konzentriert, an denen Pflanzen in den Boden eingebracht sind, wobei an den gezielten Pflanzpunkten die Einsaat der Pflanzen, eine Bewässerung und/oder das Ernten der ausgereiften Pflanzen erfolgt.

Wie vorstehend bereits erläutert, kann das Fördersystem ein umlaufendes Förderband umfassen, auf dem zumindest eine Kiste, vorzugsweise eine Mehrzahl von Kisten aufsetzbar ist. Zweckmäßigerweise ist ein solches Förderband aus einem gummierten Material ausgebildet oder weist an seiner Oberfläche ein solch gummiertes Material auf, so dass damit ein Verrutschen einer Kiste auf dem Förderband verhindert wird.

Ergänzend oder alternativ zu einem Förderband kann für das Fördersystem vorgesehen sein, dass es einen Rollgang mit einer Mehrzahl von Tragrollen mit einer jeweils horizontalen Drehachse aufweist. Für diesen Fall kann zumindest eine Kiste von oben her auf die Tragrollen des Rollgangs aufgesetzt werden. Optional ist es möglich, dass der Rollgang auch eine Mehrzahl von Führungsrollen mit jeweils einer vertikalen Drehachse aufweist, wobei die Führungsrollen jeweils seitlich an dem Rollgang angeordnet sind und somit den Rollgang zur Seite hin begrenzen. Mithilfe der vorstehend genannten Rollen wird für das Fördersystem in Form eines Rollgangs erreicht, dass damit ein Bewegen von zumindest einer Kiste entlang einer Längserstreckung der Traverse mit geringem Rollwiderstand möglich ist.

Die vorliegende Erfindung richtet sich auf ein Verfahren zur Bearbeitung von landwirtschaftlichen Nutzflächen und/oder auf eine hierzu vorgesehene Vorrichtung, die eine Traverse mit einer beträchtlichen Längserstreckung aufweist. In Anbetracht ihrer Längserstreckung ist diese Traverse vorzugsweise in Leichtbau ausgeführt, wozu beispielsweise Strukturelemente aus Aluminium in Betracht kommen. Die Traverse kann grundsätzlich eine beliebige Länge aufweisen, beispielsweise eine Länge von zumindest 10 Metern oder mehr, etwa von 25 Metern. Alternativ ist für die Traverse auch eine Längserstreckung von > 30 Meter möglich.

Dank der vorstehend erläuterten Ausgestaltung der Traverse, die eine beträchtliche Längserstreckung aufweist und in Form eines Portalsystems ausgebildet sein kann, wird der Vorteil erreicht, dass beim Bewegen der Traverse eine große Boden- bzw. Ackerfläche überstrichen und somit bewirtschaftet werden kann und dabei die Bodenverdichtung auf der Boden- bzw. Ackerfläche signifikant reduziert wird. Dadurch wird weniger Energie für die Bodenaufbereitung nach der Ernte benötigt und es kann mehr CO₂ im Boden gespeichert werden als beim konventionellen Anbau.

Erfindungsgemäß kann die Traverse mit zumindest einer Feldbewirtschaftungseinrichtung bzw. Applikation ausgestattet sein, die entlang der Traverse beweglich bzw. verfahrbar ist. Eine solche Verfahrbarkeit kann beispielsweise mit Hilfe einer sog. Laufkatze oder dergleichen erreicht werden, die an zugeordneten Führungsschienen der Traverse angebracht ist.

Es ist vorgesehen, dass mittels der Traverse eine landwirtschaftliche Nutzfläche unter freiem Himmel, d.h. eine sogenannte Freifläche bewirtschaftet wird. Vor diesem Hintergrund wird nochmals darauf hingewiesen, dass die erfindungsgemäße Vorrichtung mit ihrer Traverse mit Hilfe eines zugeordneten Fahrwerks, das zumindest ein Rad aufweist, über diese landwirtschaftliche Nutzfläche verfahren bzw. bewegt werden kann.

Mit Hilfe der vorliegenden Erfindung wird vorteilhaft ein hochautomatisiertes Bewirtschaftungssystem für landwirtschaftliche Nutzflächen realisiert, die - dank der Erfindung - mit verschiedenen Gemüsekulturen bepflanzt werden können. Hierbei kann die Traverse entweder in einer Kreisbahn um eine stationäre Mittelsäule herum bewegt werden, mit der die Traverse gelenkig verbunden ist, oder entlang einer linear verlaufenden Trajektorie über die Acker- bzw. Feldfläche bewegt werden. Letzterenfalls ist an beiden Enden der Traverse jeweils ein Fahrwerk mit Rädern vorgesehen, die auf der Ackerfläche abrollen.

Die vorliegende Erfindung sieht ebenfalls ein System zur Bewirtschaftung einer landwirtschaftlichen Nutzfläche vor, welches eine vorstehend erläuterte Vorrichtung umfasst, die hierbei die Funktion einer Basisstation auf einer landwirtschaftlichen Nutzfläche erfüllt. Ein solches System umfasst des Weiteren zumindest eine relativ zur landwirtschaftlichen Nutzfläche bewegbare Plattform mit mindestens einer Feldbewirtschaftungseinrichtung, die an dem Chassis der Plattform oder einem Teil davon angebracht ist und mit der ein pflanzenbaulicher Prozessschritt durchführbar ist, und ein an oder auf dem Chassis der Plattform oder einem Teil davon angebrachtes Fördersystem. Hierbei ist die Plattform separat von der vorstehend erläuterten Vorrichtung vorgesehen und somit nicht Teil dieser Vorrichtung. Zumindest eine Kiste, vorzugsweise eine Mehrzahl von solchen Kisten, kann bzw. können mit dem Fördersystem in Längs- oder Querrichtung des Chassis bewegt und damit an eine vorbestimmte Position insbesondere angrenzend zu einer Feldbewirtschaftungseinrichtung gebracht werden kann. Die zumindest eine Plattform, oder eine Mehrzahl von solchen Plattformen, kann bzw. können in eine Position angrenzend zur Traverse gebracht werden, derart, dass die Plattform von der Traverse Kisten übernehmen kann oder solche Kisten, die dann mit Erntegut von Pflanzen gefüllt sind und sich auf der Plattform befinden, an bzw. auf die Traverse zurückgegeben werden können. Weiterhin ist die Plattform Teil eines mobilen Feldroboters, wobei an deren Chassis eine Mehrzahl von daran angebrachten Rädern vorgesehen sind, mit denen der Feldroboter über die Nutzfläche verfahrbar ist, wobei zumindest eines der Räder mit einem Antrieb versehen ist, wobei zumindest ein Rad um eine vertikale Achse an dem Chassis schwenk- bzw. drehbar gelagert sind, um für den mobilen Feldroboter eine Änderung seiner Fahrtrichtung zu ermöglichen.

**In** vorteilhafter Weiterbildung sind alle Räder der Plattform bzw. des Feldroboters jeweils um eine vertikale Drehachse schwenkbar, so dass damit der mobile Feldroboter über den Boden einer zu bewirtschaftenden landwirtschaftlichen Nutzfläche omnidirektional verfahrbar ist. Nachfolgend wird noch gesondert erläutert, in welcher Weise das Merkmal "omnidirektional" im Sinne der vorliegenden Erfindung zu verstehen ist.

In vorteilhafter Weiterbildung des erfindungsgemäßen Systems ist das Chassis der Plattform modular aufgebaut und umfasst hierbei eine Mehrzahl von länglichen und insbesondere rohrförmig ausgebildeten Steckelementen. Diese Steckelemente können insbesondere ohne Verwendung von speziellem Werkzeug miteinander verbunden und wieder voneinander gelöst werden, derart, dass dadurch zumindest eine Abmessung des Chassis veränderlich ist. Bei dieser veränderlichen Abmessung des Chassis handelt es sich vorzugsweise um die Abmessung bzw. Länge des Chassis, die quer zur Fahrtrichtung des Traktors verläuft. Ergänzend hierzu ist es auch möglich, dass eine Abmessung des Chassis in Fahrtrichtung des Traktors bzw. parallel zur Fahrtrichtung des Traktors, und/oder auch in vertikaler Richtung verändert werden kann.

In vorteilhafter Weiterbildung ist eine Steuer- oder Regelungseinrichtung vorgesehen, mit der eine Bewegung des mobilen Feldroboters bzw. der Plattform über die Nutzfläche und/oder eine Aktuierung von zumindest einer Feldbewirtschaftungseinrichtung steuer- oder regelbar sind, vorzugsweise, dass die Steuer- oder Regelungseinrichtung an dem Chassis oder einem Teil hiervon oder angrenzend hierzu angebracht ist.

In vorteilhafter Weiterbildung ist die vorstehend genannte Steuer- oder Regelungseinrichtung programmtechnisch derart eingerichtet ist, dass damit mittlere Taktzeiten und/oder ein Energiebedarf bestimmbar sind und auf Grundlage dessen eine agrarspezifische Prozesssicherheit validiert werden kann. Weitere Vorteile hierbei werden dabei erreicht, wenn die Steuer- oder Regelungseinrichtung programmtechnisch derart eingerichtet ist, dass damit eine zumindest näherungsweise Wirtschaftlichkeitsberechnung für den Einsatz bzw. Betrieb der Vorrichtung, des mobilen Feldroboters und/oder von zumindest einer daran angebrachten Feldbewirtschaftungseinrichtung durchgeführt werden kann.

Eine vorteilhafte Weiterbildung umfasst eine Sende-/Empfangseinheit, die signaltechnisch mit der Steuer- oder Regelungseinrichtung verbunden ist, wobei mittels der Sende-/Empfangseinheit Informationen bzw. Datenpakete zur Überwachung und/ oder Steuerung des Betriebs des Chassis und/oder von daran angebrachten bzw. vorgesehenen Feldbewirtschaftungseinrichtungen entweder von einer entfernten Stelle insbesondere in Form eines Leitstands empfangbar und/oder an eine solche entfernte Stelle gesendet werden können. Von weiterem Vorteil ist, wenn die Sende-/Empfangseinheit an dem Chassis oder einem Teil hiervon oder angrenzend hierzu angebracht ist.

Gemäß einer vorteilhaften Weiterbildung des erfindungsgemäßen Systems kann in Bezug auf die Plattform an zugeordneten Führungsschienen des Chassis zumindest eine Laufkatze angebracht sein, die entlang einer Längserstreckung der Plattform beweglich daran verfahrbar ist. Hierbei ist an der Laufkatze zumindest eine Feldbewirtschaftungseinrichtung angebracht ist, wobei die Laufkatze als Geräteträger für eine Feldbewirtschaftungseinrichtung dient. Dies führt in gleicher Weise wie bei der erfindungsgemäßen Vorrichtung zu dem Vorteil, dass dann dank einer Bewegung der Laufkatze an bzw. entlang der Führungsschienen eine Feldbewirtschaftungseinrichtung, die an der Laufkatze angebracht bzw. montiert ist, exakt zu einer Position auf der landwirtschaftlichen Nutzfläche bzw. einer darin eingesetzten Pflanze ausgerichtet werden kann.

Gemäß einer vorteilhaften Weiterbildung kann in Bezug auf die Plattform zumindest eine Feldbewirtschaftungseinrichtung an einer Laufkatze mittels eines Roboterarms oder dergleichen angebracht ist. Ein solcher Roboterarm hat eine Mehrzahl von Freiheitsgraden und/oder mehrere Armelemente mit einer Mehrzahl von Drehgelenken mit daraus resultierenden Freiheitsgraden, und kann in Form eines Industrieroboters mit zumindest zwei Freiheitsgraden ausgebildet sein und dabei zwei oder mehr Gelenkarme aufweisen, die jeweils um eine vertikale oder horizontale Drehachse verschwenkbar sind. Entsprechend ist es mithilfe eines solchen Roboterarms möglich, eine daran angebrachte Feldbewirtschaftungseinrichtung mit einer großen Präzision in Richtung einer Pflanze auf der landwirtschaftlichen Nutzfläche zu bringen bzw. diesbezüglich auszurichten. Gemäß einer vorteilhaften Weiterbildung des erfindungsgemäßen Systems kann in Bezug auf die Plattform deren Fördersystem eine Mitnahmeeinrichtung aufweisen, die in Wechselwirkung mit einer Kiste gebracht werden kann, um damit die Kiste entlang der Längserstreckung der Plattform in eine bestimmte Richtung zu bewegen, wobei an zugeordneten Führungsschienen der Plattform zumindest eine beweglich daran verfahrbare Laufkatze angebracht ist, an der die Mitnahmeeinrichtung vorgesehen ist.

Gemäß einer vorteilhaften Weiterbildung ist vorgesehen, dass die Plattform einen Höhenverstellmechanismus aufweist, der mit dem Fördersystem zusammenwirkt, derart, dass ein vertikaler Abstand des Fördersystems zur landwirtschaftlichen Nutzfläche und damit dessen vertikale Höhe mittels des Höhenverstellmechanismus auf einen vorbestimmten Wert einstellbar ist. Dies führt zu dem Vorteil, dass, falls die Plattform an eine Position angrenzend zur Traverse der Vorrichtung bewegt worden ist und dabei dann mögliche Höhenunterschiede zwischen dem Fördersystem der Plattform und dem Fördersystem der Vorrichtung bzw. Traverse bestehen sollten, diese Höhenunterschiede durch eine Aktuierung des Höhenverstellmechanismus der Plattform ausgeglichen werden können, indem damit das Fördersystem der Plattform auf die gleiche vertikale Höhe wie jene des Fördersystems der Vorrichtung gebracht wird. Insoweit kann der vorbestimmte Wert, auf den ein vertikaler Abstand des Fördersystems der Plattform zur landwirtschaftlichen Nutzfläche mittels des Höhenverstellmechanismus eingestellt wird, dem vertikalen Abstand bzw. der vertikalen Höhe entsprechen, den bzw. die die Traverse der Vorrichtung an einem Ende hiervon zur Landwirtschaftslichen Nutzfläche hat. In dieser Weise ist dann eine betriebssichere Übergabe von Kisten von der Traverse der Vorrichtung an die Plattform, und umgekehrt, gewährleistet.

Gemäß einer vorteilhaften Weiterbildung kann das Fördersystem der Vorrichtung und/oder das Fördersystem der Plattform eine Mitnahmeeinrichtung aufweisen, die in Wechselwirkung mit einer Kiste bringbar ist, um damit die Kiste entlang der Längserstreckung der Traverse bzw. der Plattform in eine bestimmte Richtung zu bewegen. Eine solche Mitnahmeeinrichtung kann an zumindest einer Laufkatze vorgesehen bzw. angebracht sein, wobei diese Laufkatze an zugeordneten Führungsschienen der Traverse bzw. der Plattform angebracht ist und somit entlang einer Längserstreckung der Traverse bzw. der Plattform beweglich daran verfahrbar angebracht ist. Dies bedeutet, dass dann bei einer Bewegung einer Laufkatze mittels der daran vorgesehenen Mitnahmeeinrichtung eine Kiste, die sich auf dem Fördersystem befindet, entlang der Traverse bzw. der Plattform in einer bestimmten Richtung bewegt werden kann.

Mittels einer Feldbewirtschaftungseinrichtung, die an der Traverse der Vorrichtung bzw. an der Plattform des Systems vorgesehen ist, lassen sich jegliche pflanzenbauliche Prozessschritte an bzw. auf der landwirtschaftlichen Nutzfläche durchführen, beispielsweise das Aussäen und/oder das Ernten vom Pflanzen, das Jäten von Unkraut, ein gezieltes Bewässern und/oder Düngen von Pflanzen, das Beschneiden von Pflanzen, und/oder eine gezielte Bearbeitung bzw. Auflockerung des Ackerbodens. Hierbei ist ggf. der Einsatz von Kisten, die mit Hilfe des Fördersystems entlang der Traverse der Vorrichtung bzw. entlang der Plattform bewegbar sind, hilfreich, um darin z.B. Saatgut oder geerntete Pflanzen zu transportieren bzw. einzubringen.

Vorteilhafte Weiterbildungen werden durch folgende Merkmale gebildet, die - soweit anwendbar - in gleicher Weise sowohl für eine Vorrichtung und deren Traverse als auch für eine Plattform gelten
- Die Traverse kann mit einem Ende hiervon an einer stationären Mittelsäule verbunden sein, vorzugsweise gelenkig über ein Drehkipp-Gelenk bzw. eine entsprechende Gelenkgabel, wobei das andere Ende der Traverse über ein Fahrwerk verfügt, das auf dem Boden bzw. der Ackerfläche abrollt. Damit ist die Traverse im Kreis um einen zentrischen bzw. mittigen Drehpunkt beweglich, der durch die stationäre Mittelsäule gebildet wird. Wie vorstehend bereits erläutert, ist es alternativ hierzu auch möglich, dass die Traverse an ihren beiden Enden jeweils mit einem Fahrwerk ausgestattet ist, so dass damit die Traverse linear bzw. translatorisch über den Boden verfahren werden kann. Und/oder:
- An der Traverse bzw. an der Plattform können auch mehrere "Laufkatzen" mit daran angebrachten Feldbewirtschaftungseinrichtungen vorgesehen sein, die entlang einer Längserstreckung der Traverse bzw. der Plattform beweglich daran verfahrbar sind. Eine solche Mehrzahl von "Laufkatzen" können an der gleichen Seite der Traverse und/oder an verschiedenen Seiten davon, d.h. an entgegengesetzten Seiten der Traverse (d.h. an der linken Seite und an der rechten Seite) beweglich angebracht sein. Insbesondere für den Fall, dass mehrere solche Laufkatzen mit den jeweils daran angebrachten Feldbewirtschaftungseinrichtungen an entgegengesetzten Seiten der Traverse vorgesehen sind, ist es möglich, dass dann die Laufkatzen bzw. Feldbewirtschaftungseinrichtungen an der einen Seite der Traverse unabhängig von den Laufkatzen bzw. Feldbewirtschaftungseinrichtungen bewegt werden, die an der jeweils anderen bzw. entgegengesetzten Seite der Traverse vorgesehen sind. Und/oder:
- Eine Feldbewirtschaftungseinrichtung kann mittels eines Roboterarms an der Traverse bzw. an der Plattform oder an einer Laufkatze angebunden sein. Vorzugsweise hat ein solcher Roboterarm eine Mehrzahl von Freiheitsgraden, und/oder mehrere Armelemente mit einer Mehrzahl von Drehgelenken mit daraus resultierenden Freiheitsgraden. Hieraus ergibt sich für eine Feldbewirtschaftungseinrichtung, die am freien Ende des Roboterarms angebracht sein kann, vorteilhaft eine flexible Bewegbarkeit mit einem großen Radius. Damit können auf der landwirtschaftlichen Nutzfläche auch Pflanzen bewirtschaftet bzw. erreicht werden, die nicht unmittelbar angrenzend an bzw. unterhalb der Traverse bzw. der Plattform positioniert sind. Und/oder:
- Der vorstehend genannte Roboterarm kann in Form eines SCARA-Roboters ausgebildet sein. Ein solcher SCARA-Roboter hat in bekannter Weise vier Achsen und vier Freiheitsgrade, wodurch sich für die Feldbewirtschaftungseinrichtung, die am unteren Ende der z-Achse montiert sein kann, vorteilhaft eine großer Einsatzradius ergibt. Und/oder:
- An einer Laufkatze können verschiedene Arten bzw. Typen von Feldbewirtschaftungseinrichtungen montiert werden. Erfindungsgemäß ist es vorgesehen, dass an einer Laufkatze gleichzeitig verschiedene Typen von solchen Feldbewirtschaftungseinrichtungen montiert sind. Ergänzend oder alternativ ist es erfindungsgemäß möglich, dass bei Bedarf an zumindest einer Laufkatze eine Feldbewirtschaftungseinrichtung gegen eine andere ausgetauscht wird. Zu diesem Zweck ist erfindungsgemäß an der Traverse bzw. an der Plattform ein Werkzeugwechselsystem vorgesehen, mit dem an der Traverse bzw. an der Plattform eine Mehrzahl von verschiedenen Typen von Feldbewirtschaftungseinrichtungen vorgehalten wird und bei Bedarf an zumindest einer Laufkatze eine Feldbewirtschaftungseinrichtung gegen eine andere ausgetauscht werden kann. Ein solcher Austausch erfolgt beispielsweise für den Fall, dass eine andere Pflanze bewirtschaftet und/oder ein anderer Bewirtschaftungsvorgang vorgenommen werden soll. Und/oder:
- Das vorstehend genannte Werkzeugwechselsystem bildet quasi einen "Vorratsbehälter" für verschiedene Arten von Feldbewirtschaftungseinrichtungen. Für eine gewünschte Bestückung von zumindest einer Laufkatze mit einer Feldbewirtschaftungseinrichtung eines vorbestimmten Typs ist es zweckmäßig, dass das Werkzeugwechselsystem ebenfalls entlang der Längserstreckung der Traverse beweglich ausgebildet ist, so dass dann - bei Bedarf - ein Austauschen einer Feldbewirtschaftungseinrichtung an einer ausgewählten Laufkatze und einem daran angebrachten Roboterarm, an dem die geplante Austausch- Feldbewirtschaftungseinrichtung ebenfalls montierbar ist , schneller und mit größerer Flexibilität möglich ist. Und/oder:
- Bei den vorstehend genannten Feldbewirtschaftungseinrichtungen, die an einer Laufkatze (oder alternativ: direkt an der Traverse) montiert werden können, kann es sich beispielsweise um einen Bewässerungsapplikator, einen Düngeapplikator, einen Manipulator bzw. Applikator mit zumindest einer vertikalen Dreh- bzw. Manipulationsachse und mit weiteren daran angebrachten Peripheriegeräten und/oder einen Industrieroboter (= Manipulator) mit zumindest zwei Freiheitsgraden (DOF, auch SCARA- oder Delta-Roboter) handeln. Falls ein solcher Applikator bzw. Manipulator mit zwei oder mehr vertikalen Drehachsen ausgestattet ist, bedeutet dies beispielsweise, dass er zwei oder mehr Gelenkarme aufweist, die jeweils um eine vertikale Drehachse verschwenkbar sind. Alternativ hierzu ist es auch möglich, dass solche Gelenkarme auch um eine horizontale Achse schwenkbar sind. Und/ oder:
- An oder auf der Traverse der Vorrichtung, in der Funktion als Haupttraverse, kann zumindest eine Nebentraverse verfahrbar bzw. teleskopierbar gelagert oder über ein Gelenklager in beliebiger Anordnung (horizontal, vertikal, diagonal) klappbar angebracht sein. In gleicher Weise wie an der Haupttraverse kann auch an einer solchen Nebentraverse zumindest eine Laufkatze mit daran angebrachten Feldbewirtschaftungseinrichtungen vorgesehen sein, die in Längsrichtung der Nebentraverse verfahrbar sind. Alternativ hierzu kann vorgesehen sein, dass zumindest eine Feldbewirtschaftungseinrichtung auch direkt an einer solchen Nebentraverse angebracht ist. Somit kann ein Arbeitsradius für das Bewirtschaftungssystem gemäß der vorliegenden Erfindung vorteilhaft erweitert werden, ohne dass es zu einer weiteren Verdichtung der bewirtschafteten Ackerfläche kommt. Und/oder:

- Mittels der Traverse bzw. der Plattform und von daran angebrachten Werkzeugen bzw. Feldbewirtschaftungseinrichtungen, welche entlang der Längserstreckung der Traverse bzw. der Plattform beweglich daran geführt sein kann, kann erfindungsgemäß eine Bodenauflockerung auch nur lokal im Bereich der Pflanzen, die in die Acker- bzw. landwirtschaftlichen Nutzfläche eingebracht sind, erreicht werden. Eine Bewegung von Feldbewirtschaftungseinrichtungen relativ zur landwirtschaftlichen Nutzfläche wird in Bezug auf eine Plattform auch dadurch erreicht, dass die Plattform selber auf der Nutzfläche verfahren wird, entweder als Teil eines mobilen Feldroboters oder qua einer Anhängung bzw. Anbringung an einen Traktor. Und/oder:
- Mittels der verschiedenen Typen von Feldbewirtschaftungseinrichtungen, die wie erläutert an einer Laufkatze (oder alternativ: direkt an der Traverse) montierbar sind, werden alle Prozesse der Bewirtschaftung einer landwirtschaftlichen Nutzfläche abgedeckt bzw. möglich, wie etwa eine Bodenbearbeitung (z.B. Pflügen, Grubbern), Aussaat von Pflanzen, Pflanzenschutz, Bewässerung, Düngung, Ernte und ggf. Logistik für einen "Pick-and-Place"-Ansatz. Und/oder:
- Es ist zweckmäßig, wenn jede Laufkatze jeweils über ein Werkzeugwechselsystem verfügt, mit dem wie erläutert an einer ihm zugeordneten Laufkatze verschiedene Typen von Feldbewirtschaftungseinrichtungen montiert werden können. Und/oder:
- Im Hinblick auf eine Laufkatze, die wie erläutert entlang der Längserstreckung der Traversebeweglich daran angebracht ist, versteht sich, dass eine solche Laufkatze zusammen mit der daran angebrachten Feldbewirtschaftungseinrichtung während der Bewegung der Traverse, die entweder kreisförmig um einen Mittelpunkt oder linear bzw. translatorisch entlang der Ackerfläche erfolgen kann, dann entlang der Traverse bewegt bzw. verfahren wird. Hierdurch können Pflanzen an einer beliebigen, sprich: jedweder Stelle der Ackerfläche von der Feldbewirtschaftungseinrichtung erreicht werden, um einen gewünschten Bewirtschaftungs- oder Erntevorgang auszuführen. Und/oder:
- Ein Fördersystem der Vorrichtung bzw. Plattform ist dahingehend ausgebildet, dass es in beiden Richtungen der Längserstreckung der Traverse der Vorrichtung bzw. des Chassis der Plattform aktuierbar bzw. wirksam ist. In Folge dessen kann zumindest eine Kiste entlang der Traverse in beiden Richtungen hiervon bewegt werden. Mutatis mutandis gilt dies selbstverständlich auch für eine Mehrzahl von Kisten, die auf einem Förderband oder Rollgang des Fördersystems aufgesetzt werden können.
- In Bezug auf ein Fördersystem, welches für die erfindungsgemäße Vorrichtung bzw. eine Plattform des erfindungsgemäßen Systems vorgesehen ist, können auch mehrerer solcher Fördersysteme an der Traverse der Vorrichtung bzw. an dem Chassis der Plattform vorgesehen sein. Für diesen Fall können diese mehreren Fördersysteme vertikal übereinander und/oder horizontal nebeneinander angeordnet sein. Zu diesem Zweck sind an der Traverse der Vorrichtung bzw. an dem Chassis der Plattform geeignete mechanische Vorkehrungen getroffen, um eine solche Anordnung einer Mehrzahl von Fördersystemen zu ermöglichen.
- An einer Feldbewirtschaftungseinrichtung und/oder einer zugeordneten Laufkatze, die wie vorstehend erläutert beweglich entlang der Traverse bzw. Plattform angebracht sind, kann zumindest ein Sensor oder ein entsprechendes Sensorpaket vorgesehen sein. Hiermit ist eine Arbeitsraumüberwachung und eine geeignete Erkennung von Pflanzen möglich, die mit der Feldbewirtschaftungseinrichtung bearbeitet bzw. hiervon geerntet werden. Und/oder:
- Die Traverse und/oder die Plattform, als Teil eines mobilen Feldroboters, ist mit einer Mehrzahl von Solarpanelen ausgestattet bzw. bestückt und verfügt über zumindest einen Batteriespeicher, der mit den Solarpanelen elektrisch verbunden ist. Somit ist es möglich, tagsüber diesen Batteriespeicher mit dem Strom, der durch die Solarpanele gewonnen wird, zu versorgen bzw. aufzuladen und dadurch den energetischen Eigenbedarf der Traverse bzw. des mobilen Feldroboters und der zugehörigen Einrichtungen zu decken. Damit kann der Batteriespeicher nachts auch als Nachtspeicher dienen, um einen fortwährenden Betrieb der erfindungsgemäßen Traverse bzw. des mobilen Feldroboters und der daran angebrachten Einrichtungen zu gewährleisten. In dieser Weise ist eine autarke Versorgung der erfindungsgemäßen Traverse bzw. des Feldroboters und der daran vorgesehenen Einrichtungen mit Energie gewährleistet. Beispielsweise ist es möglich, dass über der Gesamtlänge der Traverse in zwei Reihen insgesamt 75 Solar-Panels montiert sind. Damit ist eine Deckung des Energiebedarfs zu 100% möglich und somit die genannte autarke Energieversorgung der erfindungsgemäßen Traverse mit den daran angebrachten Einrichtungen gewährleistet. Und/oder:
- Die vorstehend genannten Solarpanele sind vorzugsweise oberhalb der Traverse bzw. in einem oberen Bereich davon angebracht. Entsprechend erfüllen diese Solarpanele gleichzeitig die Funktion eines Witterungsschutzes für die Traverse. Mutatis mutandis gilt dies auch für einen mobilen Feldroboter, bei dem solche Solarpanele oberhalb des Chassis der Plattform angebracht sein können. Und/ oder:
- Entlang der Traverse bzw. der Plattform ist zumindest eine Kiste bewegbar geführt - eine solche Kiste kann dazu dienen, Saatgut von dem Mittelpunkt aus zu einer gewünschten Stelle der Traverse zu verbringen, um von dort die Einsaat einer Pflanze auf dem Feld vorzunehmen. Ergänzend oder alternativ kann die Kiste - ihrer Bezeichnung entsprechend - dazu verwendet werden, Erntegut, welches im Zuge der Ernte von einem Werkzeug aus dem Boden der landwirtschaftlichen Nutzfläche herausgebracht worden ist, aufzunehmen und dann entlang der Traverse zurück zum Mittelpunkt zu verbringen. Die vorstehend genannte Kiste kann aus einer herkömmlichen Standard-Gemüsekiste gebildet sein. Und/oder:
- Im Hinblick auf den Einsatz von zumindest einer Kiste wird mit dem Fördersystem, das vorzugsweise in einem oberen Bereich der Traverse bzw. der Plattform integriert ausgebildet ist, erreicht, dass eine solche Kiste oder auch eine Mehrzahl von Kisten entlang der Längserstreckung der Traverse bzw. Plattform gezielt bewegt werden, vorzugsweise in beiden Richtungen hiervon. Bei Ausgestaltung der Erfindung als Kreisbewirtschaftungssystem ist es unter Verwendung eines solchen Fördersystems somit möglich, die Kisten vom Zentrum aus, d.h. von der mittigen stationären Säule über die Traverse radial nach außen zu transportieren. Mutatis mutandis gilt dies auch für die entgegensetzte Richtung, d.h. für einen Transport der Kisten radial nach innen, d.h. in Richtung der mittigen stationären Säule. Und/oder:
- In vorteilhafter Weiterbildung der Erfindung kann die Traverse und/oder das Fördersystem der Vorrichtung und/oder der Plattform mit einem Speicher- bzw. Rollenmagazin ausgestattet sein, in dem eine Mehrzahl von Kisten aufgenommen werden können. Ein solches Magazin kann eine Anzahl von >> 10 Kisten aufnehmen, beispielsweise 10, 20, 30, 40 oder 50 solcher Kisten oder auch eine noch größere Anzahl von Kisten.Und/oder:
- Mittels der Erfindung ist es möglich, beispielsweise auf einer landwirtschaftlichen Nutzfläche mit einer Größe von ¼ Hektar mehr als 25.000 Gemüsepflanzen wirtschaftlich anzubauen - dies sind 25% mehr als im konventionellen Anbau. Im Falle einer Ausgestaltung der Erfindung als Kreisbewirtschaftungssystem, bei dem die Traverse kreisförmig um eine stationäre Mittelsäule herum bewegt wird, können pro Tag 600 Setzlinge ausgebraucht und auch vergleichbar viele Pflanzen geerntet werden. Dabei ermöglicht die selektive Ernte eine weitere Effizienzsteigerung von beispielsweise 10% gegenüber dem konventionellen Anbau. Und/oder:
- An der Traverse und/oder an der Plattform kann eine Einrichtung mit zumindest einer Düse angebracht sein, mittels der sich eine Flüssigkeit an einer gezielten Stelle des Bodens der landwirtschaftlichen Nutzfläche einbringen bzw. injizieren lässt. Hierbei ist es vorteilhaft, wenn diese Einrichtung entlang der Längserstreckung der Traverse verfahrbar ist. Nachdem die Düseneinrichtung eine vorbestimmte Stelle an der Traverse erreicht hat, kann ein gezieltes Einbringen der zumindest einen Düse in den Boden der landwirtschaftlichen Nutzfläche z.B. durch eine Höhenverstelleinrichtung erreicht werden. Bei der Flüssigkeit kann es sich um Wasser handeln, um damit die in den Boden eingesetzten Pflanzen gezielt zu bewässern, und/oder um eine wässrige Lösung mit Düngemittel, um damit die Pflanzen gezielt zu düngen. Und/oder:

- Falls mit der vorstehend genannten Düseneinrichtung Wasser in den Boden injiziert bzw. eingespritzt, beispielsweise angrenzend bzw. in direkter Nähe der zu bewässernden Pflanzen, entspricht dies erfindungsgemäß einer Minimalmengenbewässerung, mit der im Vergleich zum konventionellen Anbau eine Wassereinsparung von etwa 80% erreicht wird. Und/oder:
- Mittels der Erfindung wird unter Verwendung von geeigneten Werkzeugen bzw. Feldbewirtschaftungseinrichtung, die wie erläutert an einer Laufkatze montiert werden können, auch ein ökologischer Pflanzenschutz ohne Chemie und eine punktförmige Bodenaufbereitung bzw. Einarbeitung von Ernteresten mit maximaler Bodenschonung und Energieeffizienz erreicht. Und/oder:
- Erfindungsgemäß kann vorgesehen sein, dass eine Bewirtschaftung der landwirtschaftlichen Nutzfläche vollautomatisch durchgeführt wird, beispielsweise von der Einsaat der Pflanzen bis zu deren Ernte. Ein Merkmal eines solchen Bewirtschaftungsansatzes kann darin bestehen, dass auf der gleichen landwirtschaftlichen Nutzfläche verschiedene Pflanzen eingesät bzw. geerntet werden. Im Zuge dessen ist es dann möglich, beim Einbringen der Ernte auch verschiedene Pflanzen zusammen in einer gemeinsamen Kiste zu sammeln, beispielsweise zwecks einer Direktvermarktung an mögliche Verbraucher. Hierdurch wird mit Hilfe der vorliegenden Erfindung erreicht, im Zuge einer Verwertung der eingebrachten Ernte mindestens eine Handels- bzw. Bearbeitungsstufe einzusparen und dadurch attraktive Marktpreise zu erzielen. Und/oder:
- Mit Hilfe der vorliegenden Erfindung kann auf einer landwirtschaftlichen Nutzfläche eine Punkt-Bewirtschaftung (sog. "*spot farming*") realisiert werden, bei der die Bewirtschaftung einer landwirtschaftlichen Nutzfläche sich lediglich auf gezielte Pflanzpunkte konzentriert, an denen Pflanzen in den Boden eingebracht sind. An diesen Pflanzpunkten erfolgt dann konkret die Einsaat der Pflanzen, deren Bewässerung und ggf. auch ein Düngen, und schließlich das Ernten der ausgereiften Pflanzen. Eine solche Art des Anbaus kann Monokulturen ersetzen und gleichzeitig Biodiversität bzw. Artenvielfalt fördern. Und/oder:
- Gemäß der Erfindung können pflanzenbauliche Anbau- und Ernteprozesse als Pick-and-Place Prozesse abgebildet werden. Hierdurch ist es erfindungsgemäß vorgesehen, diese Prozesse kulturübergreifend, d.h. für verschiedene Arten und Größen von Gemüsepflanzen durchzuführen. Beispielsweise ist es möglich, an einer Laufkatze eine geeignete Feldbewirtschaftungseinrichtung in Form eines Greifwerkzeugs zu montieren, mit dem Salat- und Kohlköpfe, sogar Kohlrabi, in beliebiger Größe geerntet werden können. Und/oder:
- Wie soeben erläutert, ist es mittels der vorliegenden Erfindung möglich, eine landwirtschaftliche Nutzfläche mit verschiedenen Sorten von Pflanzen bzw. Gemüsen zu bewirtschaften. Avisierte Kulturen können die Folgenden sein: Eisberg-, Kopf- und Romanasalat, Rot- und Weißkohl (Mini), Broccoli, Kohlrabi, Sellerie, Gurken und Zucchini, sowie Kürbis. Anders ausgedrückt, ist es mittels der vorliegenden Erfindung vorgesehen, dass auf einer landwirtschaftlichen Nutzfläche ein "gemischter Anbau" von Pflanzen bzw. Gemüse vorgenommen wird. Und/oder:
- Ernteprozessschritte für die Pflanzen erfolgen erfindungsgemäß vorzugsweise automatisiert und weiter vorzugsweise bei Nacht. Dies kann insbesondere für den Fall vorgesehen sein, dass wie vorstehend erläutert die landwirtschaftliche Nutzfläche mit verschiedenen Sorten vom Pflanzen bzw. Gemüsen bepflanzt ist. Hierbei ist es möglich, diese verschiedenen Sorten bzw. Pflanzen im Zuge der Ernte direkt ab Feld in die Kisten, die wie erläutert entlang der Traverse bzw. der Plattform transportiert werden können, einzubringen. Dabei besteht die Möglichkeit einer stationären Zugabe von Kartoffel-, Zwiebel- und Möhrenkisten, und somit das Angebot für die Endkunden zu vervollständigen. Und/oder:
- Mittels der vorliegenden Erfindung ist es möglich, eine Vielzahl von verschiedenen Gemüsekulturen entweder mit integriert ausgebildeten Feldbewirtschaftungseinrichtungen bzw. Pflanzwerkzeugen oder einer Mehrzahl von solchen Einrichtungen bzw. Werkzeugen, die auch gleichzeitig an einer Laufkatze montiert sein können, zu bewirtschaften, im Sinne eines individuellen Micro-Spot-Farming. Dies kann vorteilhaft entweder zumindest teil-automatisiert oder vorzugsweise auch voll-automatisiert erfolgen, zweckmäßigerweise nach Vorgabe von entsprechenden Solldaten im Hinblick auf einzelne Prozessschritte und deren zeitliche Abfolge bezüglich der Bewirtschaftung der landwirtschaftlichen Nutzfläche. Und/oder:
- Gemäß einer vorteilhaften Weiterbildung kann die Traverse mit einer Steuer- oder Regeleinrichtung ausgestattet sein, mittels der die Bewegung der Traverse, entweder kreisförmig um einen Mittelpunkt herum oder linear bzw. longitudinal entlang der bewirtschaftenden landwirtschaftlichen Nutzfläche, und/oder die Bewegungen bzw. Operation der daran angebrachten Feldbewirtschaftungseinrichtungen geeignet gesteuert werden können. Und/oder:
- Zweckmäßigerweise kann die vorstehend genannte Steuer- oder Regeleinrichtung programmtechnisch derart eingerichtet sein, dass die verschiedenen Ansteuerungen der Traverse und/oder von daran angebrachten Feldbewirtschaftungseinrichtungen und/oder hinsichtlich eines Transports einer Kiste entlang der Traverse nach Art eines Regelkreis, d.h. geregelt ausgeführt werden können. Mutatis mutandis gilt dies auch für die Plattform. Und/oder:
- In vorteilhafter Weiterbildung ist es mittels der vorstehend genannten Steuer- oder Regeleinrichtung auch möglich, errechnete mittlere Taktzeiten, den geschätzten Energiebedarf und/oder die agrarspezifische Prozesssicherheit zu validieren. Und/oder:
- In vorteilhafter Weiterbildung kann die vorstehend genannte Steuer- oder Regeleinrichtung programmtechnisch derart eingerichtet sein, dass damit auch eine zumindest näherungsweise Wirtschaftlichkeitsberechnung für den Einsatz bzw. Betrieb der erfindungsgemäßen Traverse bzw. Plattform möglich ist. Mutatis mutandis gilt dies auch für eine entsprechende Weiterbildung eines erfindungsgemäßen Verfahrens. Und/oder:
- In vorteilhafter Weiterbildung kann die Traverse bzw. die Plattform als Teil eines mobilen Feldroboters, mit einer Sende-/Empfangseinheit ausgestattet sein, die signaltechnisch mit der Steuer- oder Regeleinrichtung verbunden ist. Mittels dieser Sende-/Empfangseinheit ist es möglich, Informationen bzw. Datenpakete entweder von einer entfernten Stelle (beispielsweise in Form eines Leitstands zur Überwachung und/oder Steuerung des Betriebs der erfindungsgemäßen Traverse) aus zu empfangen und/oder an eine solche entfernte Stelle zu senden. Zweckmäßigerweise kann bei Ausgestaltung der Erfindung als Kreisbewirtschaftungssystem eine solche Sende-/Empfangseinheit an der stationären Mittelsäule und vorzugsweise in einem oberen Bereich davon angebracht sein, so dass damit eine gute Sende- bzw. Empfangsleistung für die zu übertragenen Daten von der entfernten Stelle und/oder an die entfernte Stelle erreicht wird. Und/oder:
- Gemäß einer vorteilhaften Weiterbildung der Erfindung ist es möglich, die zu bewirtschaftenden Pflanzen unmittelbar mit den an einer Laufkatze bzw. an der Traverse bzw. Plattform angebrachten Feldbewirtschaftungseinrichtungen zu bearbeiten. Eine solche Bearbeitung kann darin bestehen, dass die Pflanze mittels einer Feldbewirtschaftungseinrichtung bzw. eines hierzu geeignet ausgebildeten Werkzeugs geeignet zerlegt bzw. zerteilt wird und/oder dass von der Pflanze nicht verzehrbare Biomasse abgetrennt wird. Der Begriff "nicht verzehrbare Biomasse" ist im Sinne der vorliegenden Erfindung darin zu verstehen, dass es sich hierbei um absterbende Biomasse der zu bewirtschaftenden Pflanzen handelt, die durch Fäulnis, Insektenbefall, oder Nährstoff- und/oder Wassermangel entstehen kann. Und/oder:
- Zur Qualitätssteigerung des Ernteguts ist gemäß der vorliegenden Erfindung vorgesehen, dass nicht verzehrbare Biomasse von den zu erntenden Pflanzen abgetrennt wird. Ein solches Abtrennen von nicht verzehrbarer Biomasse kann in einem Stadium der Pflanze (beispielsweise Broccoli) erfolgen, währenddessen sie noch in der landwirtschaftlichen Nutzfläche angebracht ist. Ergänzend oder alternativ kann dies auch im Zuge eines Prozessschritts erfolgen, wenn die Pflanze bei der Ernte aus dem Boden ausgebracht wird. Jedenfalls wird ein solches Zerlegen von Pflanzen und/oder ein Abtrennen von nicht verzehrbarer Biomasse durch einen vorzugsweise optischen Sensor unterstützt, mit dem wie vorstehend bereits erläutert eine Feldbewirtschaftungseinrichtung bzw. eine zugeordnete Laufkatze ausgestattet sein kann und damit dann die Pflanze und deren Position und/oder Größe erfasst werden. Und/oder:
- Das vorstehend erläuterte Abtrennen von nicht verzehrbarer Biomasse ist erfindungsgemäß auch vor dem Hintergrund zu sehen, dass damit die verbleibenden gesunden Pflanzen oder Pflanzenteile geschützt und insoweit ein aktiver Pflanzenschutz erreicht wird. In gleicher Weise wird hiermit eine Wachstumsförderung durch Beeinflussung des Blattwerks und die Förderung neuer Triebe an den verbleibenden gesunden Pflanzen bzw. Pflanzenteilen erreicht. Und/oder:
- Auf der Steuer- oder Regeleinrichtung können softwareseitig Algorithmen für neue Prozesse bzw. Prozessschritte implementiert werden. Somit können mittels der Erfindung zuverlässig und insbesondere wetterunabhängig Trainingsdaten für neuronale Netze generiert werden. Das aufwendige Maskieren von Pflanzen reduziert sich, wenn jeden Tag die gleichen Pflanzen an der gleichen Position mittels der hierzu vorgesehenen Sensoren bzw. Kameras aufgenommen werden. Ein weiterer Vorteil ist, dass das Monitoring auch nach Reihenschluss im fortgeschrittenen Wachstumsstadium der zu bewirtschaftenden Pflanzen gut möglich ist. Dieser Aspekt gilt in gleicher Weise für einen Betrieb der erfindungsgemäßen Traverse und auch für ein entsprechend ausgebildetes Verfahren gemäß der vorliegenden Erfindung. Und/oder:
- Gemäß einer vorteilhaften Weiterbildung kann die Traverse (d.h. die Haupttraverse und/oder eine Nebentraverse) mit einer oder mehreren Schleppketten ausgerüstet sein, mit denen neben einer Aufnahme von elektrischen Leitungen auch eine Führung einer Bewässerungsleitung und/oder einer Leitung für Düngemittel (z.B. organischer Dünger) realisiert wird. Und/oder:
- Gemäß einer vorteilhaften Weiterbildung ist es mittels der Feldbewirtschaftungseinrichtungen auch möglich, den Anbaubereich einer landwirtschaftlichen Nutzfläche von Unkraut zu befreien. Hierbei kann vorgesehen sein, dass solches Unkraut mittels geeigneter Greifarme aus dem Boden ausgebracht und dann in angrenzend hierzu auf der Traverse bzw. Plattform befindliche Kisten eingebracht wird. Im Anschluss hieran kann dann das ausgebrachte Unkraut mittels der Kisten über die Traverse bzw. Plattform abtransportiert werden, so dass es nicht länger auf der landwirtschaftlichen Nutzfläche wuchert oder lose herumliegt. Und/ oder:
- Durch den hohen Automatisierungsgrad bei der Bewirtschaftung einer landwirtschaftlichen Nutzfläche gemäß der vorliegenden Findung und der damit verbundenen Präzision durch Visual-Servoing ergibt sich auch der wesentliche Vorteil, dass chemisch-synthetisierte Pflanzenschutzmittel vollständig substituiert werden können. Hiermit in Verbindung steht auch der Vorteil, dass durch eine selektive Präzisionsbewässerung große Mengen Wasser eingespart werden können. Im Vergleich zum konventionellen Gemüseanbau beträgt diese Wassereinsparung ca. 80%. Und/oder:
- Für die Räder eines Fahrwerks, welches an zumindest einem Ende der Traverse angebracht ist, kann im Sinne eines Bewirtschaftungssystems vorgesehen sein, dass hierzu eine Fahrspur an der Oberfläche der landwirtschaftlichen Nutzfläche zumindest in geringer Weise verdichtet oder mit einer vergleichbaren Befestigung versehen ist. In Folge dessen rollen die Räder bei einer Bewegung der Traverse auf dieser (kreisrunden oder linear verlaufenden) Fahrspur ab, so dass der Einsatz der erfindungsgemäßen Traverse auch bei Regen nicht beeinträchtigt ist bzw. unterbrochen wird. Entsprechend wird mit der vorliegenden Erfindung vorteilhaft auch eine Wetterunabhängigkeit für die Bewirtschaftung einer landwirtschaftlichen Nutzfläche erreicht. Und/oder:
- Mittels der an der Traverse beweglich angebrachten Laufkatzen ist es möglich, vorzugsweise dreieckige Folien in radialer Richtung, von aussen nach innen, auszurollen bzw. auf die landwirtschaftliche Nutzfläche auszubringen, vergleichbar zu einem Rollo. Dadurch können die klimatischen Bedingungen auf der landwirtschaftlichen Nutzfläche für die darauf befindlichen Pflanzen bei Bedarf verbessert werden. Und/oder:
- Die Traverse kann mit einem Teleskopmechanismus ausgestattet sein, mit dem eine Länge der Traverse in Richtung ihrer Längserstreckung veränderlich ist. Damit ist es möglich, eine Anpassung der Länge der Vorrichtung an die Gegebenheiten einer zu bewirtschaftenden landwirtschaftlichen Nutzflächen individuell anzupassen. Dies gilt auch im Betrieb bzw. Einsatz der erfindungsgemäßen Vorrichtung. Und/oder:
- Für den Fall, dass die Traverse mit einem Ende an einer stationären Mittelsäule verbunden und insoweit als Teil eines Kreisbewirtschaftungssystem ausgebildet ist, ergeben sich weitere Vorteile der Erfindung durch folgende Aspekte:
   - Im Zusammenhang mit dem vorstehend genannten Teleskopmechanismus kann eine damit realisierbare Längenveränderung der Traverse auch im Zuge bzw. während der Drehbewegung der Traverse um die stationäre Mittelsäule erfolgen, so dass im Ergebnis mittels der Traverse Ackerflächen überstrichen und erfindungsgemäß bewirtschaftet werden können, die beispielsweise rechteckig oder mit beliebig vielen Ecken (bspw. Trapezoiden und Polygonen) ausgebildet sind. Und/oder:
   - An der stationären Mittelsäule kann zumindest ein Sensor vorgesehen sein, mit dem eine Bewegung der Traverse und einer daran angebrachten Laufkatze (oder einer Mehrzahl von solchen Laufkatzen) mit den zugehörigen Feldbewirtschaftungseinrichtungen detektiert werden kann. Vorzugsweise ist ein solcher Sensor als Sensorpaket und umfasst eine Mehrzahl von Einzelsensoren, mit denen beispielsweise eine "Rundumüberwachung", d.h. in einem Winkelbereich von 360° um die stationäre Mittelsäule herum möglich ist. Ergänzend oder alternativ kann vorgesehen sein, dass der Sensor an der stationären Mittelsäule schwenkbeweglich angebracht ist und dadurch jeweils in Richtung der Traverse ausrichtbar ist, um die Position der Traverse und insbesondere der daran angebrachten Laufkatzen unter zugehörigen Feldbewirtschaftungseinrichtungen zu erfassen. Und/oder:
   - Im Bereich der stationären Mittelsäule oder angrenzend hierzu kann ein Basisterminal vorgesehen sein, mit dem die erforderliche Feldlogistik realisiert wird. Dies bedeutet, dass mittels dieses Basisterminals beispielsweise eine Bereitstellung bzw. Ausgabe von Saatgut und/oder die Auf- bzw. Abnahme von Erntegut möglich ist, vorzugsweise durch den Einsatz der vorstehend bereits genannten Kisten. Durch Verwendung solcher Kisten, die entlang der Traverse in beiden Richtungen hiervon transportiert werden können, ist es möglich, einerseits Saatgut von dem Basisterminal zu den jeweiligen Laufkatzen mit den daran angebrachten Feldbewirtschaftungseinrichtungen zu transportieren, und/oder andererseits Erntegut, welches aus der landwirtschaftlichen Nutzfläche bzw. dem Ackerboden ausgebracht worden ist, dann zurück zum Basisterminal zu bringen. Damit werden mittels der vorliegenden Erfindung ein hoher Integrationsgrad für ein System zur Bewirtschaftung einer landwirtschaftlichen Nutzfläche realisiert und insoweit die Vorteile von herkömmlichen großen und kleinen Feldrobotern erstmalig miteinander kombiniert. Und/oder:
   - Die zentrische Lagerung von einem Ende der Traverse an der stationären Mittelsäule verfügt über zumindest zwei Freiheitsgrade, so dass die Traverse auch in einem Gelände mit Neigung installiert werden kann.

In Anbetracht der vorstehend erläuterten beträchtlichen Längserstreckung der Traverse ist die vorliegende Erfindung - im Wort- bzw. doppelten Sinne - als Brückentechnologie zu verstehen, denn: Die beträchtliche Längserstreckung der Traverse und der Einsatz von daran angebrachten Applikatoren bzw. Werkzeugen zur Bewirtschaftung in Verbindung mit einer charakteristischen Bewegung der Traverse über die zu bewirtschaftende landwirtschaftliche Nutzfläche führt zu den vorstehend genannten Vorteilen.

Im Sinne der vorliegenden Erfindung sind die Begriffe bzw. Merkmale "Feldbewirtschaftungseinrichtung" und "Feldbearbeitungseinrichtung" synonym zu verstehen. Bei Durchführung des erfindungsgemäßen Verfahrens und/oder beim Einsatz der Vorrichtung bzw. des Systems gemäß der vorliegenden Erfindung kann vorgesehen sein, dass hierbei die pflanzenbaulichen Prozessschritte entweder im Stillstand der Vorrichtung bzw. der Plattform durchgeführt werden, oder dass diese pflanzenbaulichen Prozessschritte während einer horizontalen Bewegung der Vorrichtung bzw. der Plattform relativ zur landwirtschaftlichen Nutzfläche ausgeführt werden und dabei diese horizontale Bewegung eine Geschwindigkeit von 10 m/s oder weniger hat. Für den letztgenannten Fall ist es vorteilhaft, wenn diese Geschwindigkeit deutlich weniger als 10 m/s beträgt, beispielsweise nur 5 m/s, weiter vorzugsweise bis zu 1,5 m/s, was einer menschlichen Schrittgeschwindigkeit entspricht. Der besagte Stillstand der Vorrichtung bzw. der Plattform, oder aber deren horizontale Bewegung relativ zur landwirtschaftlichen Nutzfläche bei einer sehr moderaten

Geschwindigkeit wie erläutert, ist hinsichtlich einer Durchführung von pflanzenbaulichen Prozessschritten dahingehend vorteilhaft, dass sich dabei die Vorrichtung bzw. Plattform in einer bestimmten Zone einer zu bewirtschaftenden landwirtschaftlichen Nutzfläche befindet. Dies führt zu dem Vorteil, dass in der besagten bestimmten Zone der Nutzfläche ausgewählte pflanzenbauliche Prozessschritte von der Vorrichtung bzw. Plattform, an der zumindest eine Feldbewirtschaftungseinrichtung angebracht ist, mit chirurgischer Präzision selektiv in Bezug auf eine einzelne Pflanze, einzelne Pflanzenbestandteile oder eine einzelne Pflanzposition ausgeführt werden können. Erst nachdem zumindest ein ausgewählter Prozessschritt oder mehrere solcher Prozessschritte in der vorbestimmten Zone der Nutzfläche ausgeführt bzw. abgeschlossen worden sind, wird dann die Vorrichtung bzw. Plattform, entweder auf ihren eigenen Rädern oder, im Fall einer Plattform gemäß einer nachstehend noch erläuterten zweiten Variante, durch einen hierzu vorgesehenen Traktor oder dergleichen, in eine vorzugsweise daran angrenzende nächste vorbestimmte Zone der zu bewirtschaftenden landwirtschaftlichen Nutzfläche weiter bewegt, in der dann erneut ausgewählte pflanzenbauliche Prozessschritte für zumindest eine Pflanze von der Vorrichtung durchgeführt werden.

Die Erfindung ist nachfolgend anhand von bevorzugten Ausführungsformen in der Zeichnung schematisch dargestellt und wird unter Bezugnahme auf die Zeichnung ausführlich beschrieben.

Es zeigen:
- Fig. 1: eine Perspektivansicht einer erfindungsgemäßen Vorrichtung mit einer um einen Mittelpunkt kreisförmig herum bewegt Traverse, und vergrößerter Ansichten von Teilbereichen hiervon,
- Fig. 2: eine weitere Perspektivansicht der Vorrichtung von Fig. 1,
- Fig. 3: eine Draufsicht auf die Vorrichtung von Fig. 1,
- Fig. 4: eine Seitenansicht der Vorrichtung von Fig. 1 bzw. Fig. 2,
- Fig. 5: eine weitere Perspektivansicht der Vorrichtung von Fig. 1,
- Fig. 6: eine Perspektivansicht einer Feldbewirtschaftungseinrichtung, die Teil der Vorrichtung von Fig. 1 ist,
- Fig. 7: eine Perspektivansicht der Feldbewirtschaftungseinrichtung von Fig. 6, wenn diese an der Traverse der Vorrichtung von Fig. 1 angebracht ist,
- Fig. 8: eine Seitenansicht der Feldbewirtschaftungseinrichtung von Fig. 7,
- Fig. 9: eine Perspektivansicht eines Teilbereichs der Traverse von Fig. 1 und eines zugeordneten Fördersystems mit einer darin aufgenommenen Kiste,
- Fig. 10: eine Perspektivansicht eines Teilbereichs der Traverse von Fig. 1 mit einer Mehrzahl von darin aufgenommenen Kisten,
- Fig. 11: eine weitere Perspektivansicht der Feldbewirtschaftungseinrichtung von Fig. 7
- Fig. 12,: 13 jeweils schematisch stark vereinfachte Seitenansichten der Traverse mit einem daran angebrachten Fördersystem mit einem Rollgang, der sich in seiner Neigung relativ zur Horizontalen veränderlich einstellen lässt.
- Fig. 14: einen oberen Bereich einer stationären Mittelsäule, die Teil der Vorrichtung von Fig. 1 ist und mit der die Traverse gelenkig verbunden ist,
- Fig. 15, 16: jeweils Seitenansichten der Mittelsäule von Fig. 14,
- Fig. 17: ein Fahrwerk, das an einem Ende der Traverse angebracht ist,
- Fig. 18, 19: jeweils Perspektivansicht einer Vorrichtung gemäß einer weiteren Ausführungsform der Erfindung, bei der eine Traverse entlang bzw. auf einer Ackerfläche linear beweglich ist,
- Fig. 20: eine Perspektivansicht einer Plattform als Teil eines mobilen Feldroboters, die bzw. der Teil eines erfindungsgemäßen Systems zur Bewirtschaftung einer landwirtschaftlichen Nutzfläche ist,
- Fig. 21: eine vergrößerte Ansicht eines Teils des Feldroboters von Fig. 20,
- Fig. 22: eine Perspektivansicht einer an einem Traktor anbringbaren Plattform, die Teil eines erfindungsgemäßen Systems zur Bewirtschaftung einer landwirtschaftlichen Nutzfläche ist,
- Fig. 23: eine Seitenansicht der Plattform von Fig. 23, und
- Fig. 24: eine Perspektivansicht des Feldroboters von Fig. 20 und eines Teils der Vorrichtung von Fig. 1-19, als Teil des erfindungsgemäßen Systems zur Bewirtschaftung einer landwirtschaftlichen Nutzfläche.

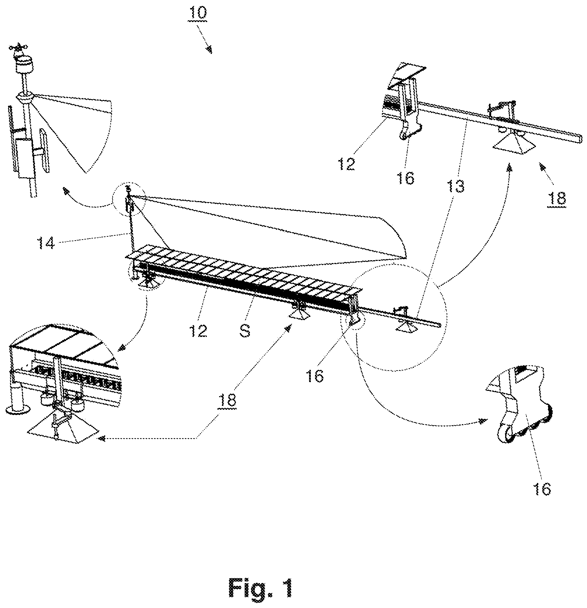

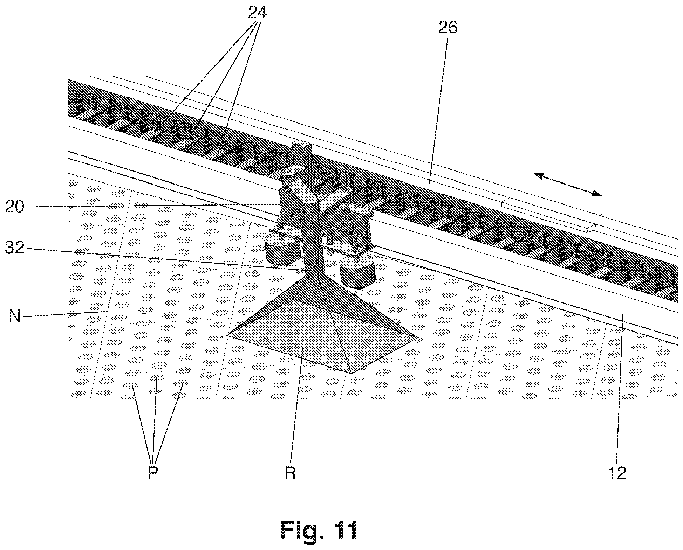

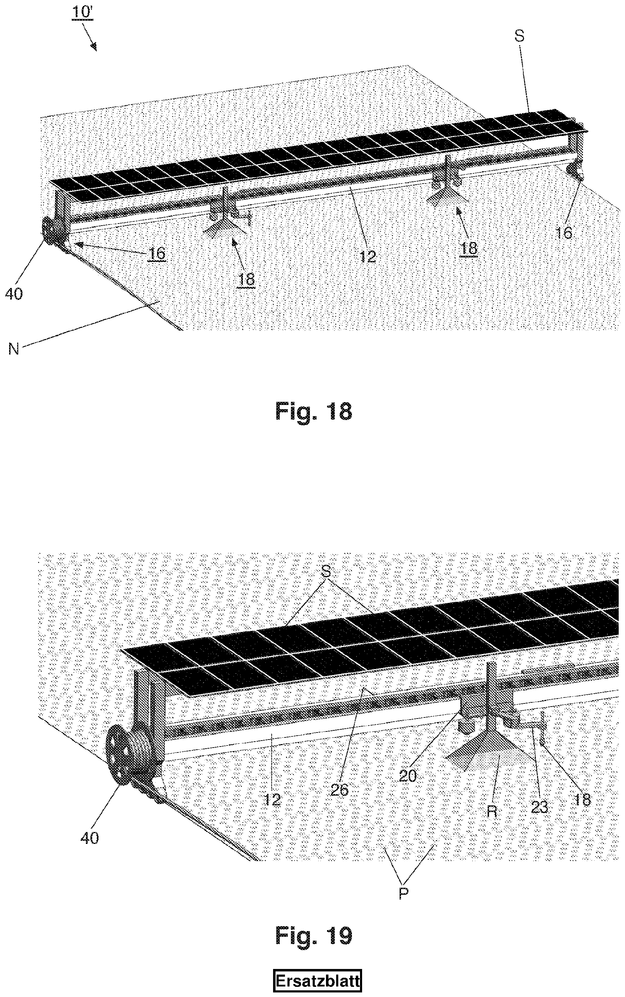

Nachstehend sind unter Bezugnahme auf die Fig. 1 bis 24 bevorzugte Ausführungsformen für eine erfindungsgemäße Vorrichtung 10, 10', eines entsprechenden Verfahrens und auch eines Systems erläutert, um damit eine landwirtschaftliche Nutzfläche N (vgl. Fig. 11, Fig. 19) zu bewirtschaften. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Fig. 1 zeigt eine Perspektivansicht der erfindungsgemäßen Vorrichtung 10 gemäß einer ersten Ausführungsform, bei der eine Traverse 12 mit einem Ende davon an einer stationären Mittelsäule 14 angelenkt ist. An dem anderen Ende der Traverse 12, d.h. entgegengesetzt zur Mittelsäule 14 ist ein Fahrwerk 16 mit Rädern angebracht, die auf einer Bodenfläche abrollen.

Einige Bereiche der erfindungsgemäßen Vorrichtung 10 sind in der Fig. 1 eingekreist und angrenzend hierzu nochmals vergrößert dargestellt. Details zu diesen vergrößerten Bereichen sind nachstehend in weiteren Figuren erläutert.

Die Traverse 12 ist mit der stationären Mittelsäule 14 gelenkig verbunden, derart, dass die Traverse 12 um die Mittelsäule 14 herum entlang einer Kreisbahn beweglich ist.

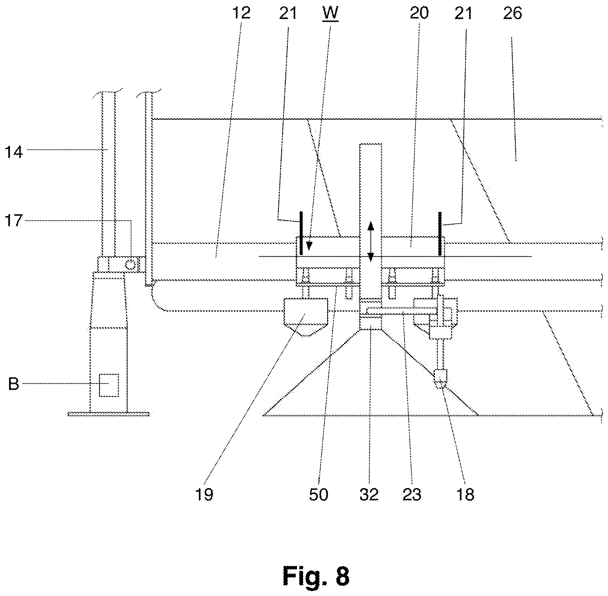

Die Anlenkung der Traverse 12 an der stationären Mittelsäule 14 kann ein Dreh-Kippgelenk 17 (Fig. 8) mit einer horizontal verlaufenden Drehachse aufweisen: Hiermit ist es möglich, dass das der Mittelsäule 14 entgegensetzte Ende der Traverse 12, an dem das Fahrwerk 16 angebracht ist, relativ zur Mittelsäule 14 verschwenkbar ist. Dies ermöglicht einen Ausgleich von Bodenunebenheiten bzw. einen Einsatz der erfindungsgemäßen Vorrichtung 10 auf bzw. in einem ondulierten Gelände. Anders ausgedrückt, wird es im Betrieb der erfindungsgemäßen Vorrichtung 10 dank des Dreh-Kippgelenk 17 ermöglicht, auch schiefe Ebenen zu befahren bzw. die Traverse 12 der Vorrichtung 10 auf einem solchen Gelände einzusetzen.

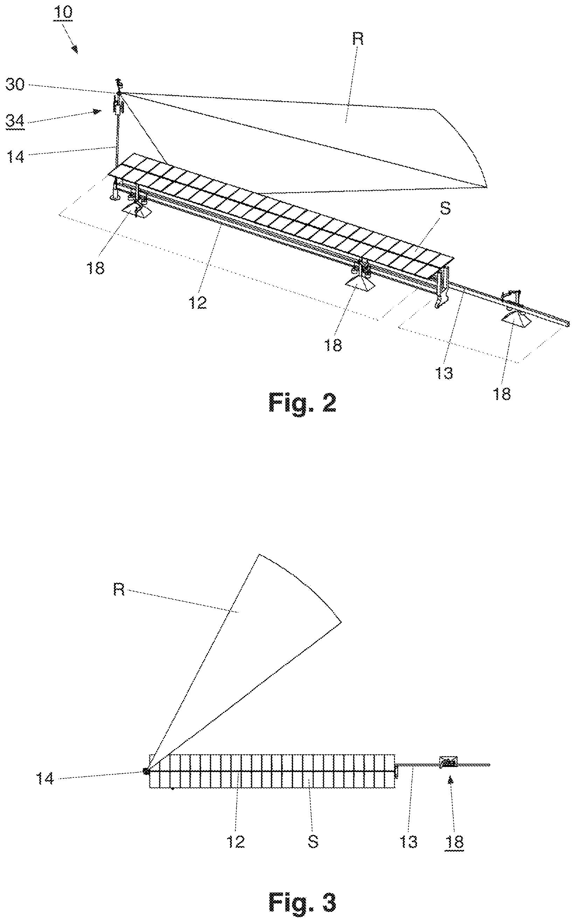

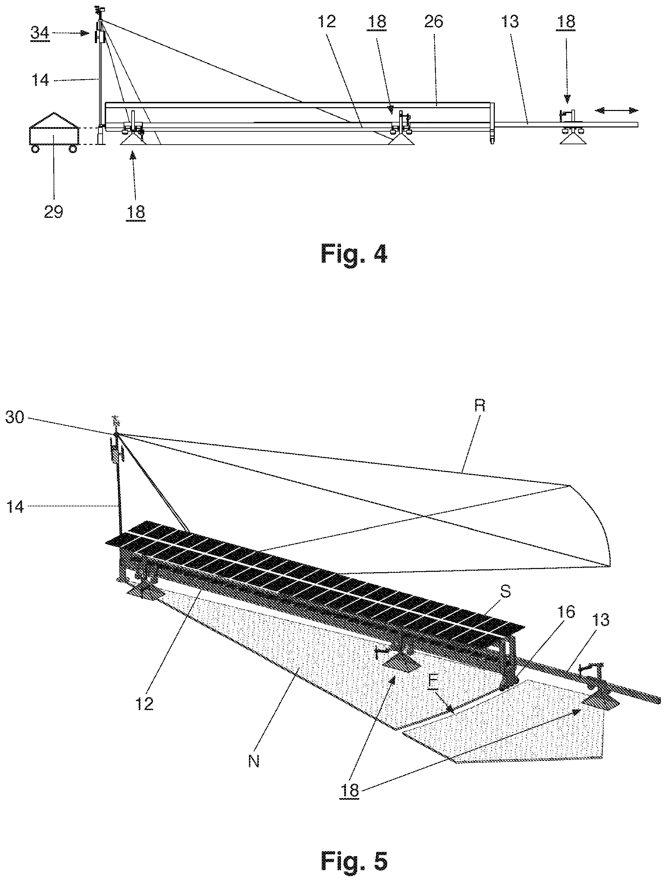

Fig. 2 zeigt die Vorrichtung 10 von Fig. 1 in einer weiteren Perspektivansicht. Hieraus ist ersichtlich, dass an der Traverse 12, in ihrer Funktion als Haupt-Traverse, an deren freien Ende eine Nebentraverse 13 angebracht ist. Diese Nebentraverse 13 kann relativ zur Haupt-Traverse 12 teleskopartig verstellt werden. Dies bedeutet, dass an der Haupt-Traverse 12 eine (nicht gezeigte) Führungseinrichtung vorzugsweise mit motorischen Mitteln vorgesehen ist, wodurch die Nebentraverse 13 in ihrer Länge relativ zur Haupt-Traverse 12 verstellt werden kann. Eine solche teleskopartige Verstellung der Nebentraverse 13 ist in Fig. 4 (am rechten Bildrand) auch durch einen entsprechenden Doppelpfeil symbolisiert.

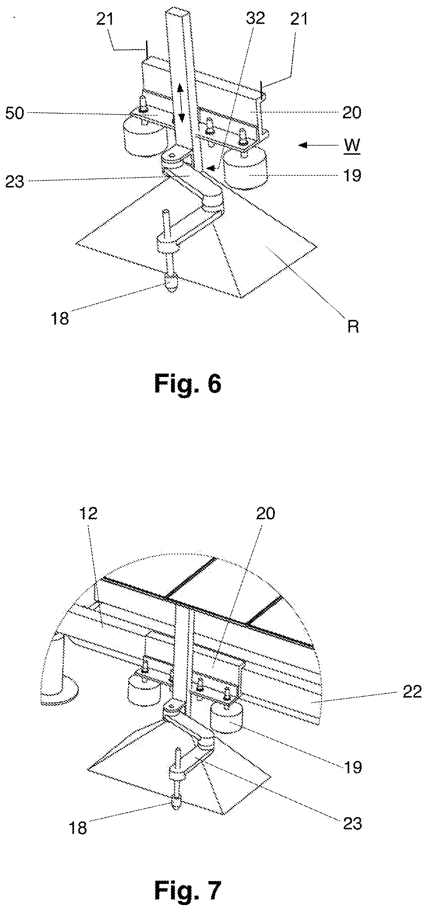

An der Traverse 12 ist zumindest eine Feldbewirtschaftungseinrichtung 18 angebracht, die entlang der Traverse 12 bewegt werden kann. Zu diesem Zweck ist eine Laufkatze 20 (Fig. 6) vorgesehen, die an der Traverse 12 mittels Führungsschienen 22 (Fig. 7) angebracht und hiermit entlang der Traverse 12 längsverschieblich ist.

Eine Verstellung bzw. Verschiebung einer Laufkatze 12 entlang der Traverse 12 kann mit geeigneten motorischen Mitteln erfolgen.

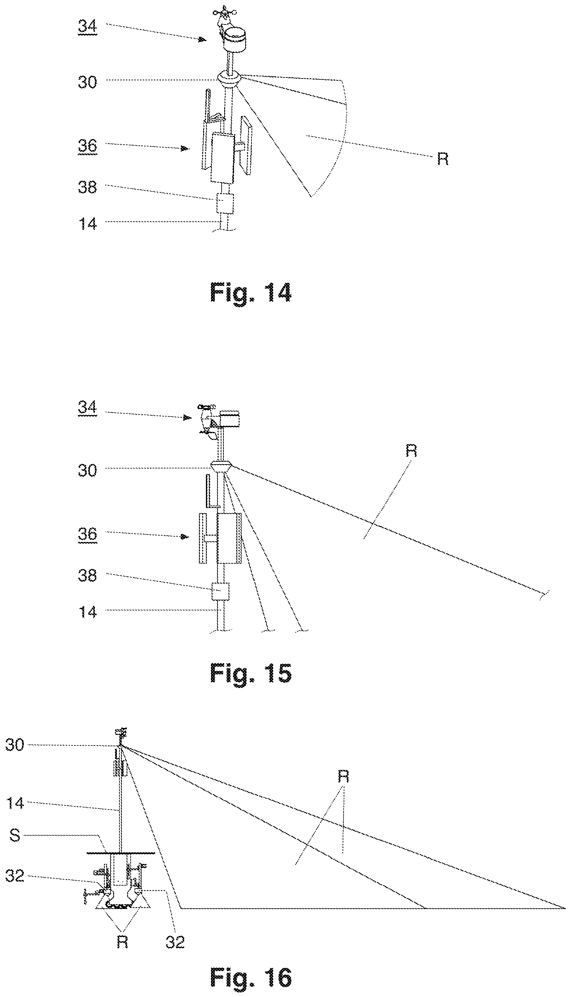

An der Traverse 12 sind eine Mehrzahl von Feldbewirtschaftungseinrichtungen 18 angebracht. Dies ist insoweit zu verstehen, dass Feldbewirtschaftungseinrichtungen 18 auf beiden Seiten der Traverse 12 (vgl. Fig. 16) angebracht sind, und/oder dass mehrere Feldbewirtschaftungseinrichtungen 18 jeweils auf der gleichen Seite der Traverse 12 angebracht sind, wie es z.B. durch die Fig. 2 veranschaulicht wird. Diesbezüglich wird gesondert darauf hingewiesen, dass jeder einzelnen Feldbewirtschaftungseinrichtung 18 eine Laufkatze 20 zugeordnet sein kann, mittels der eine Längsverschiebung der Feldbewirtschaftungseinrichtung 18 entlang der Traverse 12 realisiert wird.

Eine Feldbewirtschaftungseinrichtung 18 kann an der Traverse 12 bzw. einer zugeordneten Laufkatze 20 mittels eines vorzugsweise gelenkigen Roboterarms 23 angebunden sein. Dies wird durch Fig. 6 und Fig. 7 veranschaulicht. Ein solcher Roboterarm 23 hat mehrere Freiheitsgrade und vorzugsweise mehrere gelenkig miteinander verbundener Armelemente, mit denen eine flexible Bewegung der Feldbewirtschaftungseinrichtung 18, die an einem freien Ende des Roboterarms 23 angebracht ist, im Raum möglich ist. Hierzu gehört auch eine vertikale Verstellbarkeit des Roboterarms 23, so dass damit eine Arbeitshöhe der Feldbewirtschaftungseinrichtung 18 bzw. deren Abstand zum Boden - je nach Bedarf - veränderlich ist. Diese vertikale Verstellbarkeit ist z.B. in Fig. 6 durch einen entsprechenden Doppelpfeil symbolisiert.

Die Vorrichtung 10 umfasst ein Werkzeugwechselsystem W, mit dem es möglich ist, an einem Roboterarm 23 unterschiedliche Feldbewirtschaftungseinrichtungen zu montieren, je nach Einsatzzweck bzw. Typ einer vorzunehmenden Bearbeitung der landwirtschaftlichen Nutzfläche N.

In der Fig. 6 ist eine einfache Form für das vorstehend genannte Werkzeugwechselsystem W gezeigt, die hier aus einer an einer Laufkatze 20 angebrachten Halteplatte 50 besteht, an der zumindest eine weitere Feldbewirtschaftungseinrichtung 19 vorgehalten werden kann. Falls ein Austausch der Feldbewirtschaftungseinrichtung 18, die bereits an dem freien Ende des Roboterarms 23 montiert ist, beispielsweise gegen die Feldbewirtschaftungseinrichtung 19 gewünscht sein sollte, kann die Feldbewirtschaftungseinrichtung 18 auf der Halteplatte 50 an einer freien Position hiervon "abgesetzt" werden, so dass im Anschluss daran die andere Feldbewirtschaftungseinrichtung 19 an dem freien Ende des Roboterarms 23 montiert wird. Diese andere Feldbewirtschaftungseinrichtung 19 dient dann zur Durchführung eines anderen pflanzenbaulichen Prozessschrittes.

Falls eine oder mehrere Feldbewirtschaftungseinrichtungen auf der Halteplatte 50 abgesetzt werden bzw. angeordnet sind, erfüllt die Halteplatte 50 hierbei die Funktion eines "Parkbereichs".

Des Weiteren wird darauf hingewiesen, dass auch an der Nebentraverse 13 eine Feldbewirtschaftungseinrichtung 18 angebracht sein kann. Dies kann mit oder ohne den Einsatz einer Laufkatze 20 bzw. eines Roboterarms 23 erfolgen.

Das vorstehend erläuterte Austauschen einer Feldbewirtschaftungseinrichtung 18, 19 an einem freien Ende des Roboterarms 23 erfolgt vorzugsweise vollautomatisch. Jedenfalls dient ein solches Austauschen einer Feldbewirtschaftungseinrichtung gegen eine andere in der Regel zur Vorbereitung eines Wechsels eines pflanzenbaulichen Prozessschrittes, mit dem auf der Nutzfläche N angebaute Pflanzen P bewirtschaftet werden.

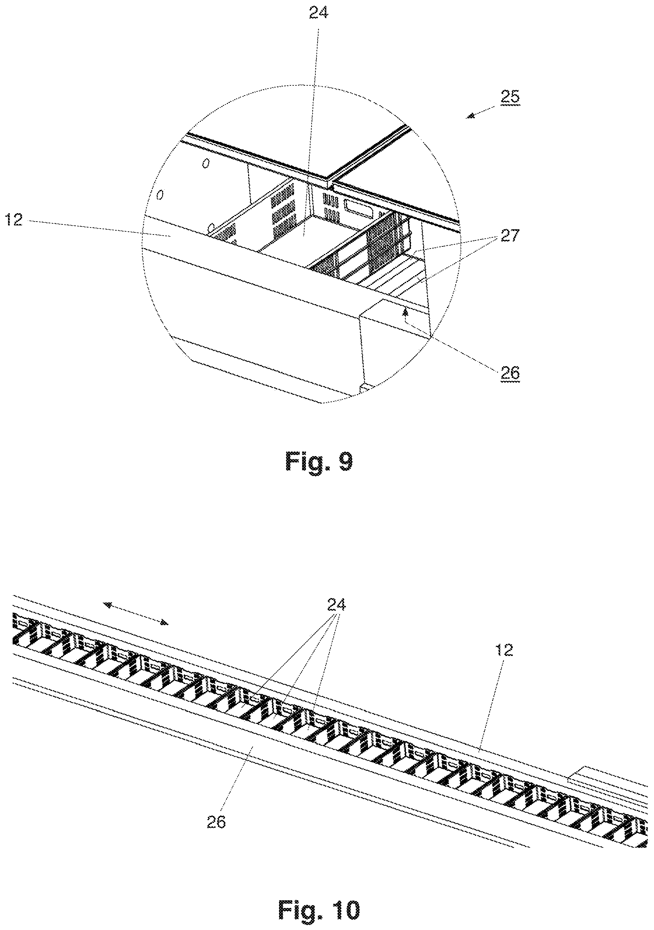

Die erfindungsgemäße Vorrichtung 10 umfasst eine Kiste 24 (vgl. Fig. 9), vorzugsweise eine Mehrzahl von solchen Kisten 24, und ein Fördersystem 25, das an der Traverse 12 entlang von deren Längserstreckung vorgesehen ist (vgl. Fig. 10, Fig. 11). Mit Hilfe dieses Fördersystems 25 kann zumindest eine Kiste 24 entlang der Traverse 12 bewegt werden. Zweckmäßigerweise kann das Fördersystem 25 eine Mehrzahl von solchen Kisten 24 aufnehmen, wie es durch die Perspektivansicht der Traverse 12 gemäß Fig. 10 veranschaulicht ist.

Das Fördersystem 25 ist zweckmäßigerweise an einer Oberseite der Traverse 12 vorgesehen, oder in einem oberen Bereich der Traverse 12 integriert ausgebildet.

Das Fördersystem 25 kann als Förderbandsystem ausgebildet sein. Für diesen Fall ist ein (nicht gezeigtes) umlaufendes Förderband vorgesehen, auf dem die Kisten 24 aufgesetzt werden können. Beim Umlaufen dieses Förderbands werden dann die Kisten 24 an eine vorbestimmte Position bewegt bzw. transportiert, die sich vorzugsweise angrenzend zu einer an der Traverse 12 angebrachten Feldbewirtschaftungseinrichtung 18 befindet.

Ergänzend oder alternativ hierzu kann das Fördersystem 25 mit einem Rollgang 26 ausgestattet sein, der eine Mehrzahl von Tragrollen 27 mit einer jeweils horizontalen Drehachse aufweist. Das in Fig. 9 gezeigte Fördersystem 25 umfasst einen solchen Rollgang 26, wobei hierin zwei Tragrollen 27 davon zu erkennen sind.

Optional ist es für Rollgang 26 möglich, dass dieser auch eine Mehrzahl von (nicht gezeigten) Führungsrollen mit jeweils einer vertikalen Drehachse aufweist. Diese Führungsrollen sind jeweils seitlich an dem Rollgang 26 angeordnet und begrenzen somit den Rollgang 26 zur Seite hin.

Jedenfalls lässt sich eine Kiste 24 von oben her auf die Tragrollen 27 des Rollgangs 26 aufsetzen, wobei dann ein Bewegen der Kiste 24 durch den Kontakt mit den einzelnen Rollen des Rollgangs 26 entlang einer Längserstreckung der Traverse 12 mit nur sehr geringem Rollwiderstand möglich ist.

Die Perspektivansichten von Fig. 10 und 11 verdeutlichen, dass der Rollgang 26 des Fördersystems 25 entlang der Längserstreckung der Traverse 12 vorgesehen ist. Diesbezüglich kann vorgesehen sein, dass zumindest einige dieser Rollen des Rollgangs 26, vorzugsweise eine oder mehrere der Tragrollen 27, motorisch angetrieben sind, um dadurch einen gezielten Transport der Kisten 24 in einer gewünschten Richtung entlang der Traverse 12 auf dem Rollgang 26 zu realisieren.

In Bezug auf den vorstehend genannten Rollgang 26 des Fördersystems 25 darf an dieser Stelle gesondert darauf hingewiesen werden, dass dieser Rollgang 26 im Sinne der vorliegenden Erfindung die Funktion eines Speicher- bzw. Rollenmagazins erfüllt. Jedenfalls erfüllt dieser Rollgang 26, im Sinne seiner Funktion als Speicher- bzw. Rollenmagazin, den Zweck, dass damit bzw. darin eine Vielzahl von Kisten 24 aufgenommen werden können, nämlich entlang der Längserstreckung der Traverse 12.

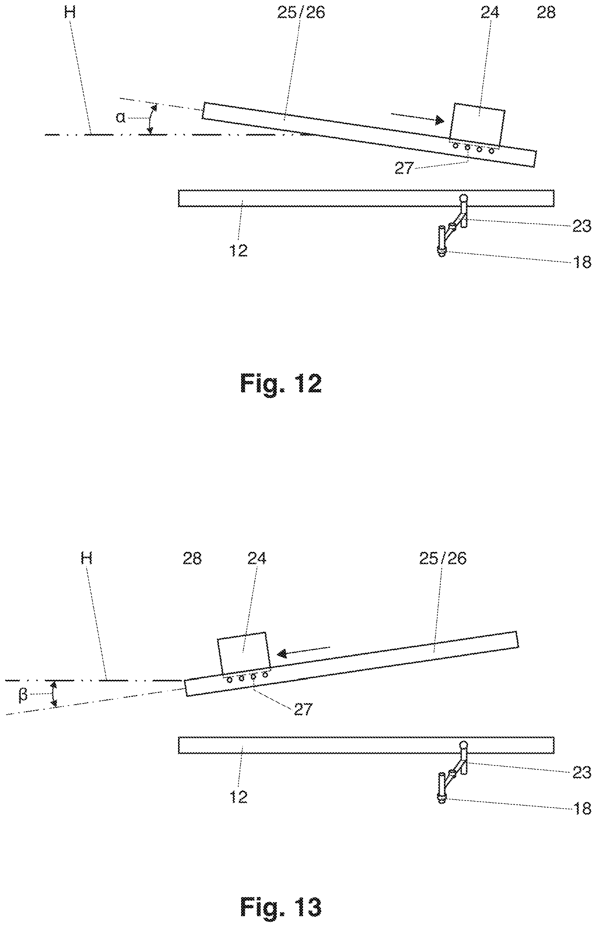

Nachstehend ist anhand der Fig. 12 und Fig. 13 verdeutlicht, dass der Rollgang 26 des Fördersystems 25 in seiner Positionierung bzw. Neigung zur Horizontalen H eingestellt werden kann. Hierzu im Einzelnen:
Der Rollgang 26 des Fördersystems 25 ist in einer (nicht gezeigten) verschwenkbaren Halterung aufgenommen, deren Position relativ zur Horizontalen H verändert bzw. eingestellt werden kann. Zur Verstellung der Neigung des Rollgangs 26 umfasst die Vorrichtung 10 separate Mittel, mit denen die Halterung für den Rollgang 26 entsprechend angesteuert werden kann, um eine geänderte Position für eine gewünschte Neigung des Rollgangs 26 zu realisieren. Dadurch ist es möglich, dass für den Rollgang 26 eine Position eingestellt wird, in welcher er mit seiner Längserstreckung relativ zur Horizontalen H einen Winkel einschließt und somit "schräg" verläuft. In Folge dessen wird sich eine Kiste 24, falls sie auf diesen schräg angestellten Rollgang 26 aufgesetzt ist, automatisch dank der Schwerkraft und ohne einen separaten Antrieb in Richtung des tieferen Endes des Rollgangs 26 bewegen. In gleicher Weise gilt dies auch für eine Mehrzahl von Kisten 24.

Bei den Darstellungen von Fig. 12 und Fig. 13 kann es sich jeweils um die Ausführungsform von Fig. 1 handeln, wobei sich die (hier nicht gezeigte) stationäre Mittelsäule 14 am linken Ende der Traverse 12 befindet.

Die Fig. 12 verdeutlicht des Weiteren, dass an der Traverse 12 eine Feldbewirtschaftungseinrichtung 18 mittels eines Roboterarms 23 angebracht ist. Zwecks einer vereinfachten Darstellung ist hierbei eine zugeordnete Laufkatze nicht gezeigt.

In Bezug auf die Darstellung von Fig. 12 wird gesondert darauf hingewiesen, dass hier der Rollgang 26 derart eingestellt ist, dass seine Längsachse mit der Horizontalen H einen Winkel "alpha" einschließt und dadurch das im Bildbereich rechts dargestellte Ende des Rollgangs 26 abgesenkt ist. Somit bewegt sich eine Kiste 24, die auf den Rollgang 26 aufgesetzt ist, in Folge der Schwerkraft auf den Tragrollen 27 automatisch von links nach rechts, wie es in Fig. 12 auch durch einen Pfeil symbolisiert ist. Damit kann eine Kiste 24 von der stationären Mittelsäule 14 her zu dem entgegensetzen Ende des Rollgangs 26 bewegt werden.

Der Rollgang 26 ist mit einem aktuierbaren Stoppelement 28 ausgerüstet, nämlich zweckmäßigerweise an einer Stelle, die sich angrenzend zur Position der Feldbewirtschaftungseinrichtung 18 befindet. Die Funktion dieses Stoppelements 28 beruht nun darauf, dass, falls eine Kiste 24 sich auf dem Rollgang 26 in Folge der Schwerkraft in Richtung des tieferen Endes (in der Fig. 12 von links nach rechts) bewegt, dieses Stoppelement 28 dann genau zu dem Zeitpunkt aktuiert bzw. betätigt wird, wenn die Kiste 24 die Position der Feldbewirtschaftungseinrichtung 18 erreicht hat. Hierdurch wird dann die Kiste 24 auf dem Rollgang 26 blockiert und somit an der Position der Feldbewirtschaftungseinrichtung 18 "angehalten". In dieser Weise ist es möglich, auch bei einem passiven Rollgang 26, dessen Rollenelemente über keinen separaten Antrieb verfügen, eine Kiste 24 an eine vorbestimmte Position zu bringen, die beispielsweise und wie erläutert der Position einer Feldbewirtschaftungseinrichtung 18 entsprechen kann.

In Bezug auf das vorstehend genannte Stoppelement 28 versteht sich, dass der Rollgang 26 entlang seiner Längserstreckung mit einer Vielzahl von solchen Stoppelementen 28 ausgerüstet sein kann. Diese einzelnen Stoppelemente 28 können jeweils an Positionen zu daran angrenzenden Feldbewirtschaftungseinrichtungen 18 angeordnet sein. Hiermit wird erreicht, dass einzelne Kisten 24 auf dem Rollgang 26 jeweils angrenzend zu einer ausgewählten Feldbwirtschaftungseinrichtung 18 durch ein Aktuieren des Stoppelements 28 angehalten werden können, wenn der Rollgang 26 wie erläutert mit seiner Längsachse relativ zur Horizontalen H um einen Winkel schräg gestellt ist.

Fig. 13 verdeutlicht eine weitere mögliche Position in Bezug auf den Rollgang 26, in welcher seine Längsachse mit der Horizontalen H einen Winkel "beta" einschließt und dadurch die Rollgang 26 schräg nach unten in Richtung der (hier nicht gezeigten) stationäre Mittelsäule 14 gekippt ist. Hierdurch wird erreicht, dass eine auf dem Rollgang 26 aufgesetzte Kiste 24 sich in Folge der Schwerkraft automatisch von rechts nach links bewegt. Eine solche Bewegung kann beispielsweise dann erfolgen, wenn ein Erntevorgang, bei dem mittels einer an einem Roboterarm angebrachten Feldbewirtschaftungseinrichtung 18 Erntegut von der Nutzfläche N in die Kiste 24 eingebracht worden ist, abgeschlossen ist und anschließend die Kiste 24 zurück in Richtung der stationären Mittelsäule 14 transportiert werden soll. In gleicher Weise wie bereits zur Fig. 12 erläutert ist auch für die Neigung des Rollgangs 26 in der entgegengesetzten Richtung, wie es in Fig. 13 gezeigt ist, ein gezieltes Anhalten einer auf dem Rollgang 26 befindlichen Kiste 24 möglich, indem ein Stoppelement 28 aktuiert wird. Ein solches Stoppelement 28 kann sich beispielsweise angrenzend zu einem Speicher- bzw. Rollenmagazin befinden, in welches die Kiste 24 für eine weitere Logistik des darin eingebrachten Ernteguts übergeben wird.

An dieser Stelle wird gesondert darauf hingewiesen, dass eine schwenkbare Ausführungsform des Rollgangs 26, bei der wie erläutert dessen Längsachse einen Winkel mit der Horizontalen einschließen kann und dadurch der Rollgang 26 "schräg" gestellt ist, auch mit dem Merkmal kombiniert werden kann, dass zumindest eine Tragrolle 27 des Rollgangs 26 mit einem motorischen Antrieb ausgerüstet ist.

Gemäß einer weiteren Variante des Fördersystems 25 weist dieses eine Mitnahmeeinrichtung 21 auf, die an einer Laufkatze 20 vorgesehen sein kann. Eine solche Mitnahmeeinrichtung 21 ist stark vereinfacht in der Fig. 6 gezeigt, nämlich in Form von Stäben 21, die jeweils seitlich an der Laufkatze 20 angebracht sein können.

Die vorstehend genannte Mitnahmeeinrichtung 21 dient zu dem Zweck, in Wechselwirkung mit einer Kiste 24, die sich auf dem Fördersystem 25 befindet, gebracht werden. Beispielsweise können die in Fig. 6 gezeigten Stäbe 21 der Mitnahmeeinrichtung teleskopförmig und vertikal nach oben ausgefahren werden und gelangen dadurch gezielt in eine Wechselwirkung mit einer auf dem Fördersystem 25 befindlichen Kiste. Für diesen Fall wird dann eine solche Kiste 24 bei einer Bewegung der Laufkatze 24, an der die Mitnahmeeinrichtung 21 angebracht bzw. vorgesehen ist, dank der Wechselwirkung mit der Mitnahmeeinrichtung 21 entlang der Traverse 12 in gleicher Weise wie die Laufkatze 20 bewegt bzw. hiervon "mitgeschleppt".

In der Fig. 8 ist die Mitnahmeeinrichtung 21, beispielsweise in Form der besagten Stäbe, die teleskopartig vertikal nach oben ausfahrbar und hierdurch in Wechselwirkung mit einer Kiste 24 bringbar sind, ebenfalls stark vereinfacht und symbolisch jeweils an den Seiten einer Laufkatze 20 gezeigt.

Durch ein gezieltes Zurück- bzw. Einfahren der teleskopförmigen Stäbe kann, bei Bedarf, eine Wechselwirkung zwischen der Mitnahmeeinrichtung 21 und von zumindest einer Kiste 24 auch wieder aufgehoben werden. Für diesen Fall kann dann eine Laufkatze 20, an welcher die Mitnahmeeinrichtung 21 angebracht ist, entlang der Längserstreckung der Traverse 12 verfahren werden, ohne dass dann damit durch die Mitnahmeeinrichtung 21 eine Kiste 24 bewegt bzw. "mitgeschleppt" wird.

Falls die Erfindung mit einer Mitnahmeeinrichtung 21 wie vorstehend erläutert ausgerüstet ist, ergibt sich hierdurch der Vorteil, dass dann für ein Bewegen von Kisten 24 entlang einer Längserstreckung der Traverse 12 weitere Antriebe für den Rollgang 26 des Fördersystems 25 entbehrlich sind. Beispielsweise bedeutet dies, dass dann alle Rollen des Rollgangs "passiv", d.h. antriebslos sein können, weil die gewünschte Bewegung von zumindest einer Kiste 24, Vorzug einer Mehrzahl von solchen Kisten 24, allein durch die Mitnahmeeinrichtung 21 realisiert werden kann.

Mit dem vorstehend erläuterten Fördersystem 25, ungeachtet ob in Form eines (nicht gezeigten) Förderbandsystems oder eines Rollgangs 26, wird somit erreicht, dass zumindest eine Kiste 24, vorzugsweise eine Mehrzahl von solchen Kisten 24, stets an eine vorbestimmte Position der Traverse 12 bewegt werden können, in der dann eine Wechselwirkung mit einer an einem Roboterarm 23 angebrachten Feldbewirtschaftungseinrichtung 18, 19 möglich ist.

An der stationären Mittelsäule 14 kann an einem oberen Ende davon ein erster Sensor 30 angebracht sein.

Die Vorrichtung 10 kann beispielsweise angrenzend zur stationären Mittelsäule 14 einen (nicht gezeigten) Speicher für Wasser, Dünger oder dergleichen aufweisen. Diesbezüglich ist es möglich, einen Wasserspeicher auch an eine externe Pumpe anzuschließen, um den Wasserspeicher mit frischem Wasser wiederaufzufüllen und damit ein fortwährender Betrieb der Vorrichtung 10 zu gewährleisten.

Der vorstehend genannte Speicher kann an oder auf der Traverse 12 angebracht sein, so dass er zusammen mit der Traverse 12 um die stationäre Mittelsäule 14 herum bewegt wird.

Die Vorrichtung 10 kann des Weiteren mit einer eigenen (nicht gezeigten) Pumpe ausgestattet sein. Mit einer solchen Pumpe ist ein Fördern von Wasser oder flüssigem Dünger von dem genannten Wasserspeicher in Richtung von Feldbewirtschaftungseinrichtungen in Form von Düsen möglich, mit denen ein gezieltes Bewässern und/oder Düngen von Pflanzen realisiert wird.

Mittels des ersten Sensors 30 ist es möglich, ausgewählte Bereiche der landwirtschaftlichen Nutzfläche N und/oder eine Position der Traverse 12 relativ zur stationären Mittelsäule 14 zu überwachen. Insoweit wird der erste Sensor 30 im Sinne der vorliegenden Erfindung auch als "globaler Sensor" bezeichnet.

An zumindest einer Feldbewirtschaftungseinrichtung 18 kann ein zweiter Sensor 32 (vgl. Fig. 6, Fig. 16) vorgesehen sein. Dieser zweite Sensor 32 dient dazu, einen Bereich bzw. Raum der landwirtschaftlichen Nutzfläche unmittelbar angrenzend zu dieser Feldbewirtschaftungseinrichtung 18 bzw. unterhalb davon zu erfassen, um damit Informationen bezüglich der Pflanzen zu gewinnen, die auf der landwirtschaftlichen Nutzfläche N angebaut werden. Insoweit wird der erste Sensor 30 im Sinne der vorliegenden Erfindung auch als "lokaler Sensor" bezeichnet.

Die Bereiche, die mittels des ersten Sensors 30 bzw. des zweiten Sensors 32 erfasst werden, sind in der Zeichnung jeweils mit "R" angezogen (vgl. Fig. 2, Fig. 3, Fig. 5, Fig. 6, Fig. 11, Fig. 14-16, Fig. 19) und erfindungsgemäß als "Überwachungsraum" zu verstehen. Dies bedeutet, dass mittels der Sensoren 30, 32 nicht nur eine ebene Fläche (beispielsweise der Boden der landwirtschaftlichen Nutzfläche N), sondern auch der Raum oberhalb davon detektiert werden kann. Entsprechend können damit auch die Position der Traverse 12, der daran angebrachten jeweiligen Feldbewirtschaftungseinrichtungen 18 und von Pflanzen P und beispielsweise deren Wachstum und/oder Formgebung erfasst werden.

An einem oberen Bereich der stationären Mittelsäule 14 können eine Sende-/Empfangseinheit 36 und/oder eine Wetterstation 34 angebracht sein. Dies ist in der Perspektivansicht von Fig. 2 als auch in den Seitenansichten gemäß Fig. 14+15 veranschaulicht.

Des Weiteren umfasst die erfindungsgemäße Vorrichtung 10 auch eine Steuer- oder Regeleinrichtung 38, die ebenfalls an der stationären Mittelsäule 14 angebracht sein kann und in Fig. 14 bzw. Fig. 15 stark vereinfacht in Form eines Rechtecks symbolisiert ist. Diese Steuer- oder Regeleinrichtung 38 ist mit den Sensoren 30, 32 als auch mit der Sende-/Empfangseinheit 36 signaltechnisch verbunden.

Mittels der Steuer- oder Regeleinrichtung 38 ist es möglich, die kreisförmige Bewegung der Traverse 12 um die stationäre Mittelsäule 14 herum und/oder die Operationen bzw. Bewegungen der einzelnen Feldbewirtschaftungseinrichtungen 18 anzusteuern. Dies kann jeweils auch nach Art eines Regelkreises, d.h. geregelt erfolgen.

Mittels der Sende-/Empfangseinheit 36 können Informationen an die erfindungsgemäße Vorrichtung 10 von einem entfernten (nicht gezeigten) Leitstands übertragen bzw. empfangen werden, wobei diese Informationen Daten für einen Betrieb der erfindungsgemäßen Vorrichtung 10 bzw. für das Durchführen eines Verfahrens gemäß der vorliegenden Erfindung enthalten. Beispielsweise können diese Informationen erfindungsgemäß Solldaten für einen Betrieb der Vorrichtung 10 und der daran angebrachten Einrichtungen enthalten, wobei dann die Ansteuerung der einzelnen Einrichtungen und/oder eine Bewegung der Traverse 12 kreisförmig um die stationäre Mittelsäule 14 herum auch geregelt erfolgen kann.

In gleicher Weise können mittels der Sende-/Empfangseinheit 36 Informationen, die von den Sensoren 30, 32 bezüglich der hiervon erfassten Überwachungsräume R gewonnen worden sind, dann an einen entfernten Leitstand zur weiteren Auswertung des Betriebs der erfindungsgemäßen Vorrichtung 10 übertragen werden.

Fig. 11 veranschaulicht den Einsatz der vorliegenden Erfindung bei einer Punkt-Bewirtschaftung der landwirtschaftlichen Nutzfläche N, auch als "*spot farming*" bezeichnet. Wie vorstehend bereits erläutert, ist hierin der Überwachungsraum, welcher von dem zweiten Sensor 32 erfasst wird, mit "R" angezogen. Die Pflanzen P, welche sich in diesem Überwachungsraum R befinden, können somit von den Sensor 32 erfasst bzw. detektiert werden, wobei diese Information dann an die Steuer- oder Regeleinrichtung 38 übertragen werden können.

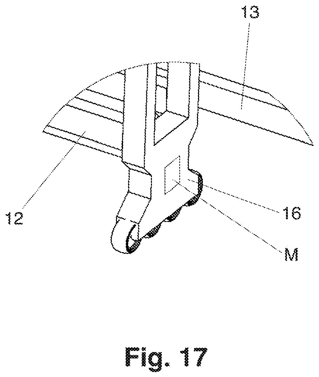

Fig. 17 zeigt ein Fahrwerk 16, das an einem Ende der Traverse 12 vorgesehen ist. Ein solches Fahrwerk 16 kann mit einem Motor ausgerüstet sein, mit dem zumindest ein Rad des Fahrwerks 16 angetrieben wird. Durch den Kontakt dieses angetriebenen Rads mit der darunter befindlichen Bodenfläche wird für die Traverse 12 ein Drehmoment um die stationäre Mittelsäule 14 erzeugt, derart, dass damit die Traverse 12 in einer gewünschten Richtung in eine kreisförmige Bewegung um das Stativ 14 herum versetzt wird. In der Fig. 17 ist der Motor mit "M" bezeichnet und zur Vereinfachung lediglich durch ein Rechteck symbolisiert.

Eine resultierende kreisförmige Fahrspur, die sich bei einem Bewegen der Traverse 12 um die stationären Mittelsäule 14 ergibt, ist in der Fig. 5 mit "F" bezeichnet.

In Abweichung von der in Fig. 17 gezeigten Darstellung kann für das Fahrwerk 16 auf vorgesehen sein, dass dieses anstatt mit Rädern als Kettenfahrwerk ausgeführt ist.

Gemäß einer weiteren (nicht gezeigten) Alternative kann für das Fahrwerk 16 vorgesehen sein, dieses mit einer Laufschiene bzw. als Schienensystem auszuführen, wobei dann die Räder nicht auf dem natürlichen Ackerboden, sondern stattdessen auf einer auf dem Ackerboden angeordneten Laufschiene abrollen.

Beiden der soeben genannten Varianten für das Fahrwerk 16 haben den Vorteil gemeinsam, dass damit die erfindungsgemäße Vorrichtung 10 bei deren Einsatz auf einer landwirtschaftlichen Nutzfläche N unter freiem Himmel weniger empfindlich gegen Regen ist und insoweit eine verbesserte Wetterunabhängigkeit erreicht wird.

Die erfindungsgemäße Vorrichtung 10 umfasst zumindest ein Basisterminal 29 (vgl. Fig. 4), das angrenzend zur stationären Mittelsäule 14 vorgesehen ist. Dieses Basisterminal 29 dient zu dem Zweck, die erforderliche Feldlogistik zu realisieren. Dies bedeutet, dass mittels dieses Basisterminals 29 beispielsweise eine Bereitstellung bzw. Ausgabe von Saatgut und/oder die Auf- bzw. Abnahme von Erntegut möglich ist, vorzugsweise durch den Einsatz der vorstehend bereits genannten Kisten 24.

Das Basisterminal 29 ist stark vereinfacht in der Seitenansicht von Fig. 4 gezeigt.

Um ein vollständiges und permanentes Drehen der Traverse 12 um die stationäre Mittelsäule 14 in der gleichen Richtung nicht zu behindern, kann vorgesehen sein, dass das Basissterminal 28 mit der Traverse 12 wirkverbunden und auf der entgegengesetzten Seite des Stativs 14 angeordnet ist. Dies ist in der Fig. 4 durch gestrichelte Linien symbolisiert. Dies bedeutet, dass bei einer Drehung der Traverse 12 um die stationäre Mittelsäule 14 herum das Basisterminal 29 mitgedreht wird. Je nach Größe und Gewicht des Basisterminals 29 kann dieses an ihrer Unterseite mit Rollen bzw. Rädern ausgestattet sein, die Kontakt zur Bodenfläche haben und darauf abrollen.

Alternativ zu der Bedeutung eines Basisterminals kann in Fig. 4 mit dem Bezugszeichen "29" auch ein Logistikfahrzeug gemeint sein, mit dem beispielsweise das Anliefern von Saatgut an die Traverse 12 und/oder eine Direktvermarktung zum Kunden (Lieferservice) vorgenommen wird. Letzterenfalls bedeutet dies, dass dann die mit Erntegut gefüllten Kisten 24 auf dieses Logistikfahrzeug 29 geladen und ohne weitere Zwischenstopps zum Endkunden transportiert werden.

In den Fig. 18 und Fig. 19 ist eine zweite Ausführungsform der erfindungsgemäßen Vorrichtung 10' gezeigt. Diese Ausführungsform umfasst eine Traverse 12, an deren Enden jeweils ein Fahrwerk 16 mit Rädern angeordnet ist. Hiermit wird erreicht, dass die Vorrichtung 10' und die zugehörige Traverse 12 über eine landwirtschaftliche Nutzfläche N in Längsrichtung bzw. linear bewegt werden kann.

Zumindest ein Rad des Fahrwerks 16 kann mit einem Motor ausgestattet oder zumindest gekoppelt sein. Vorzugsweise sind mehrere Räder des Fahrwerks 16 mit einem motorischen Antrieb versehen, zweckmäßigerweise auf beiden Seiten der länglichen Traverse 12.

Gemäß einer (nicht gezeigten) Modifikation ist bei der zweiten Ausführungform der erfindungsgemäßen Vorrichtung 10' gemäß Fig. 18 bzw. Fig. 19 das Fahrwerk, welches jeweils an beiden Enden der Traverse 12 vorgesehen ist, jeweils mit Rädern ausgestattet ist, die um eine vertikale Drehachse schwenkbar sind. Damit ist es möglich, dass die Traverse 12 dieser Ausführungsform über den Boden einer zu bewirtschaftenden landwirtschaftlichen Nutzfläche N omnidirektional verfahren werden kann.

Unter dem Merkmal "omnidirektional" ist im Sinne der vorliegenden Erfindung eine Verfahrbarkeit bzw. Beweglichkeit in einer jedweden gewünschten Richtung zu verstehen. Hiermit ist dann zusätzlich zu einer rein linearen bzw. translatorischen Bewegung auch ein "schräges" Fahren, d.h. in diagonaler Richtung, und/oder auch ein Drehen auf der Stelle und/oder ein Fahren im Kreis möglich. Dies gilt sowohl für die vorstehend genannte Vorrichtung 10', als auch in gleicher Weise für eine Plattform 101 eines erfindungsgemäßen Systems, die nachfolgend noch gesondert erläutert wird.

An einer Seite der Traverse 12 kann eine Kabeltrommel 40 angebracht sein. Auf dieser Kabeltrommel 40 können jeweilige Versorgungsleitungen für Strom und/oder Medien zur Bewirtschaftung der Nutzfläche N (z.B. Wasser, Dünger) geführt sein. Entsprechend ist es mittels einer solchen Kabeltrommel 40 und der zugehörigen Versorgungsleitungen möglich, die Traverse 12 der Vorrichtung 10' mit Strom, Wasser und/oder Dünger zu versorgen.

Bei der zweiten Ausführungsform der erfindungsgemäßen Vorrichtung 10' sind an der Traverse 12 ebenfalls eine Mehrzahl von Feldbewirtschaftungseinrichtungen 18 vorgesehen, vorzugsweise an beiden Seiten hiervon. Die Funktionsweise dieser Feldbewirtschaftungseinrichtungen 18 und ein mögliches Ansteuern durch die Steuer- oder Regeleinrichtung 38 erfolgt in gleicher Weise wie bei der ersten Ausführungsform der erfindungsgemäßen Vorrichtung 10, so dass zur Vermeidung von Wiederholungen auf die obigen Erläuterungen verwiesen werden darf.

Des Weiteren darf darauf hingewiesen werden, dass auch die zweite Ausführungsform der erfindungsgemäßen Vorrichtung 10' gemäß der Fig. 18, 19 mit einem Fördersystem 25 in Form eines Rollgangs 26 ausgestattet ist. Ein gezieltes Bewegen von zumindest einer Kiste 24, vorzugsweise eine Mehrzahl von solchen Kisten 24, auf dem Rollgang 26 und somit entlang der Traverse 12 kann dadurch erreicht werden, dass zumindest eine Tragrolle 27 des Rollgangs 26 mit einem motorischen Antrieb versehen ist und/oder dass eine Neigung des Rollgangs 26 relativ zur Horizontalen H verstellt wird. Zur Vermeidung von Wiederholungen wird diesbezüglich auf die Erläuterungen zu den Fig. 12 und 13 verwiesen, die mutatis mutandis auch für die zweite Ausführungsform gemäß der Fig. 18 + Fig. 19 gelten.

Zur Versorgung mit elektrischer Energie kann die erfindungsgemäße Vorrichtung 10, 10' mit zumindest einem Batteriespeicher B ausgestattet sein. Gemäß der Darstellung von Fig. 8 kann dieser Batteriespeicher B in einem unteren Bereich der stationären Mittelsäule 14 untergebracht sein. Jedenfalls dient dieser Batteriespeicher B zu dem Zweck, die verschiedenen Einrichtungen der Vorrichtung mit Energie bzw. Strom zu versorgen. Die hierzu erforderlichen Versorgungsleitungen von dem Batteriespeicher B zu den einzelnen Verbrauchern sind zur Vereinfachung nicht gezeigt.

Bei beiden der vorstehend genannten Ausführungsform der erfindungsgemäßen Vorrichtung 10, 10' sind an einer Oberseite der Traverse 12 eine Mehrzahl von Solarpanelen S (vgl. Fig. 2; Fig. 18+19) angeordnet. Diese Solarpanele S sind elektrisch mit dem Batteriespeicher B verbunden und dienen dazu, diesen Batteriespeicher B mit der durch Sonneneinstrahlung gewonnenen elektrischen Energie wieder aufzuladen. In dieser Weise wird für die Erfindung eine autarke Energieversorgung gewährleistet.

Die Solarpanele S sind in ihren Abmessungen zweckmäßigerweise derart bemessen, dass damit das Fördersystem 25 und die darin aufgenommenen bzw. transportierten Kisten 24 von oben her abgeschirmt werden, beispielsweise gegen Niederschlag oder das Eindringen von Staub und Schmutz. Dies ist beispielsweise in den Darstellungen von Fig. 2, 3, 5, 18 und 19 veranschaulicht.

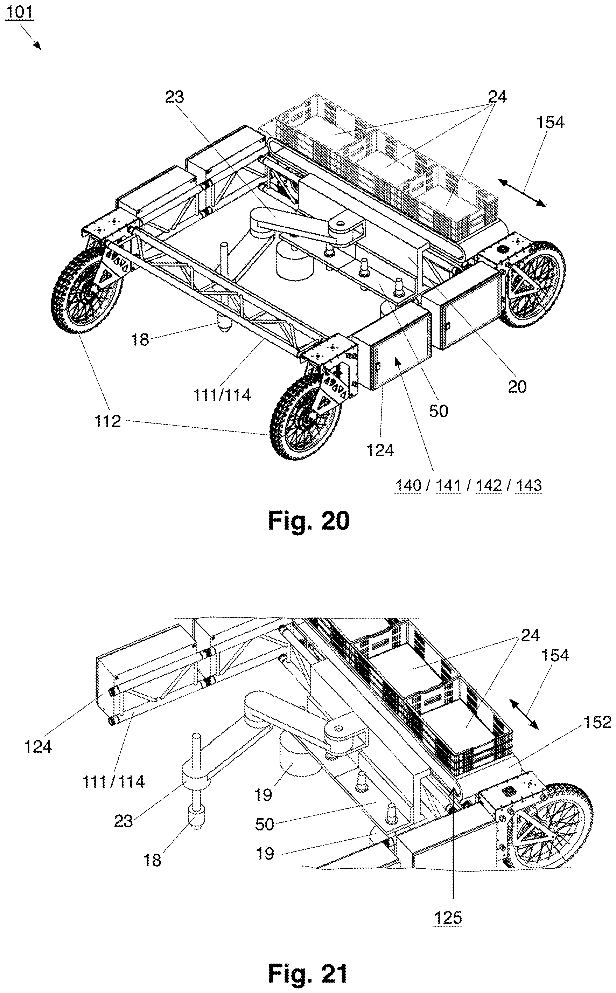

Nachfolgend sind unter Bezugnahme auf die Fig. 20-24 verschiedene Ausführungsformen eines erfindungsgemäßen Systems 100 und von zugehörigen Komponenten dargestellt und erläutert, mit dem eine landwirtschaftliche Nutzfläche N bewirtschaftet werden kann.

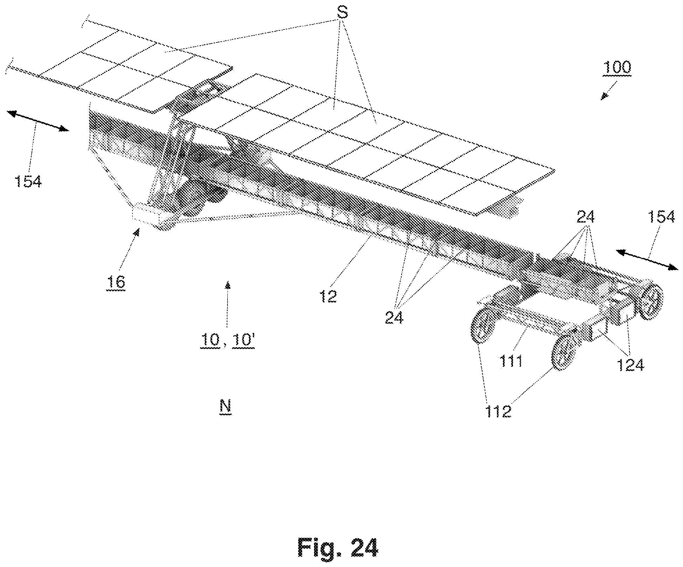

Bei einem solchen System 100 (vgl. Fig. 24) kommt eine Vorrichtung 10, 10' zum Einsatz, die vorstehend unter Bezugnahme auf die Fig. 1-19 dargestellt und erläutert worden ist. In Bezug auf das erfindungsgemäße System 100 erfüllt hierbei diese Vorrichtung 10, 10' die Funktion einer Basisstation auf einer landwirtschaftlichen Nutzfläche N, wie nachfolgend noch im Detail erläutert.

Das erfindungsgemäße System 100 umfasst zumindest eine Plattform 101, 101' mit mindestens einer Feldbewirtschaftungseinrichtung 18, 19, die an einem Chassis 111 der Plattform 101, 101' oder einem Teil davon angebracht ist und mit der zumindest ein pflanzenbaulicher Prozessschritt durchgeführt werden kann.

In Bezug auf die vorstehend genannte Plattform 101, 101' darf ergänzend darauf hingewiesen werden, dass hierbei eine Feldbewirtschaftungseinrichtung 18, 19 an dem zugehörigen Chassis 111 an einer Laufkatze 20 montiert sein kann, ggf. unter Verwendung eines Roboterarms 23. Insoweit entspricht eine solche Anbringung einer Feldbewirtschaftungseinrichtung 18, 19 jener von Fig. 6, wobei zur Vermeidung von Wiederholungen auf die Erläuterungen zur Fig. 6 verwiesen wird.

An dem Chassis 111 der Plattform 101, 101' oder einem Teil davon ist ein Fördersystem 125 (vgl. Fig. 21) angebracht, mit dem zumindest eine Kiste 24 in Längs- und/oder Querrichtung des Chassis 111 bewegbar und damit an eine vorbestimmte Position insbesondere angrenzend zu einer Feldbewirtschaftungseinrichtung 18, 19 bringbar ist.

Im Zusammenhang mit dem erfindungsgemäßen System 100 besteht ein wesentliches Merkmal darin, dass die Plattform 101, 101' angrenzend zur Traverse 12 der Vorrichtung 10; 10' in eine Position gebracht werden kann, derart, dass die Plattform 101, 101' von der Traverse 12 Kisten 24 übernehmen kann oder solche Kisten 24, die dann mit Erntegut von Pflanzen P gefüllt sind und sich auf der Plattform befinden, an bzw. auf die Traverse 12 zurückgebbar sind.

In den Fig. 20 und 21 ist die besagte Plattform 101 nach einer ersten Variante gezeigt.

Bei der ersten Variante gemäß Fig. 20 ist die Plattform 101 Teil eines mobilen Feldroboters , wobei an einem Chassis 111 hiervon eine Mehrzahl von Rädern 112 angebracht sind, mit denen der Feldroboter 101 über die Nutzfläche N verfahren bzw. bewegt werden kann. Für die nachstehende Diskussion wird die Plattform 101 gemäß dieser ersten Variante auch lediglich als "mobiler Feldroboter 101" bezeichnet.

Zumindest ein Rad 112 des mobilen Feldroboters 101 ist um eine vertikale Achse an dem Chassis 111 schwenk- bzw. drehbar gelagert, um für den mobilen Feldroboter 101 eine Änderung seiner Fahrtrichtung zu ermöglichen.

Das Chassis 111 des Feldroboters 101 ist modular aufgebaut. Im Einzelnen besteht das Chassis 111 aus einer Mehrzahl von länglichen und insbesondere rohrförmig ausgebildeten Steckelementen 114, die in den Eckbereichen des Chassis 111 an einem jeweiligen L-förmigen Grundkörper 115 angebunden bzw. befestigt sind.

Die Steckelemente 114, die wie vorstehend erläutert Bestandteil des Chassis 111 des Feldroboters 101 sind, sind beispielsweise aus der Veranstaltungstechnik bekannt und können als 1-Punkt-Traverse oder als Mehrpunkt-Traverse ausgebildet sein. Bei der gezeigten Ausführungsform gemäß der Fig. 20, 21 sind diese Steckelemente 114 jeweils als 2-Punkt-Traverse ausgebildet.

Die besagten Steckelemente 114 des Chassis 111 zeichnet sich dadurch aus, dass sie insbesondere ohne Verwendung von speziellem Werkzeug miteinander verbindbar und wieder voneinander lösbar sind, derart, dass sich damit zumindest eine Abmessung des Chassis in einfacher Weise und schnell verändern lässt. Eine solche veränderliche Abmessung des Chassis 111 kann quer und/oder längs zu dessen Längsachse erfolgen, und/oder auch in dessen Hochachse, d.h. in vertikaler Richtung.

An dem Chassis 111 des Feldroboters 101 sind insgesamt vier Räder 112 angebracht. Zur Lagerung der Räder 112 dienen die vorstehend genannten L-förmigen Grundkörper 115. Entsprechend erfüllen diese L-förmigen Grundkörper 115 jeweils die Funktion eines Radaufhängungselements.

Im montierten Zustand des Feldroboters 101 sind die einzelnen Grundkörper 115, die zur Lagerung der jeweiligen Räder 112 dienen, und die Mehrzahl der Steckelemente 114, die an den Grundkörpern 115 Profilelementen 13 befestigt sind, somit Bestandteile des Chassis 111.

Bezüglich der Räder 112 des Feldroboters 101 darf darauf hingewiesen werden, dass für mindestens zwei solcher Räder vorgesehen sein kann, dass diese um eine vertikale Drehachse verschwenkbar sind. Damit ist es möglich, dass diese Räder 112 relativ zum Grundkörper 115 verschwenkt werden können, um somit für den mobilen Feldroboter 101, wenn er über einen Untergrund bzw. Boden verfahren wird, eine Richtungsänderung zu erreichen.

Falls alle vier Räder 112 des Feldroboters 101 um eine vertikale Drehachse verschwenkbar sind, kann damit der Feldroboter 101 auch ausgehend von einer bestimmten Position in eine beliebige Richtung insbesondere auf einer landwirtschaftlichen Nutzfläche N verfahren bzw. bewegt werden, ohne dass sich damit dann eine Beschränkung seiner Beweglichkeit in Form eines Wendekreises ergibt. Damit ist dann eine omnidirektionale Verfahrbarkeit des Feldroboters 101 gewährleistet. Bezüglich des Merkmals "omnidirektional" darf zur Vermeidung von Wiederholungen auf dessen vorstehend bereits gemachte Erläuterung verwiesen werden.

Zumindest ein Rad 112 des mobilen Feldroboters 101 kann mit einem (nicht näher bezeichneten) Motor, beispielsweise einem Radnabenmotor, ausgestattet sein. Vorzugsweise sind mehrere Räder 112 des Feldroboters 101 mit einem solchen Motorantrieb ausgestattet.

Ausweislich der Darstellung in den Fig. 20 und 21 sind an dem Chassis 111 des Feldroboters 101, an jeder Längsseite hiervon, jeweils zwei Kastenelemente 124 angebracht. Diesbezüglich kann vorgesehen sein, dass ein solches Kastenelement 124 über geeignete Befestigungsstellen mit einem Steckelement 114 verbunden ist.

Für den gezeigten Feldroboter 101 dienen die Kastenelemente 124 zu dem Zweck, darin Ausstattungselemente aufzunehmen oder anzubringen, die für ein Betrieb des Feldroboters 101 von Bedeutung sind. Bei diesen Ausstattungselementen kann es sich handeln um
- eine Batterie, oder eine Mehrzahl von solchen Batterien,
- Sensorik, beispielsweise in Form von Kameras,
- Elektrische und/oder elektronische Komponenten, beispielsweise in Form einer Steuer- oder Regeleinrichtung,
- einen Applikator bzw. eine Feldbewirtschaftungseinrichtung 18, 19, mit dem ein pflanzenbaulicher Prozessschritt durchführbar ist, und/oder
- GPS-Sensoren.

In der Darstellung von Fig. 20 ist durch entsprechende Bezugszeichen symbolisiert, dass in einem Kastenelement 124 eine Sende-/Empfangseinheit 140, eine Wetterstation 141, eine Steuer- oder Regeleinrichtung 142 und/oder eine Batterie 143 aufgenommen sein können.

Bezüglich des Merkmals einer Batterie 143 darf darauf hingewiesen werden, dass damit für die hier vorliegende Erfindung in gleicher Weise auch ein Akku gemeint ist, der sich in bekannter Weise wiederaufladen lässt.

Die Anbringung eines Kastenelements 124 an einem Steckelement 114 erfolgt im Hinblick auf einen montierten Zustand des Chassis 111 vorzugsweise an deren Aussenseite. Dies ermöglicht eine gute Zugänglichkeit für die Kastenelemente 124, beispielsweise zu Wartungs- oder Reparaturzwecken.

Bei dem mobilen Feldroboter 101 ist es möglich, daran eine Feldbewirtschaftungseinrichtung 18, 19 zu montieren, wie sie in den Fig. 6 und 7 bereits gezeigt und erläutert worden ist. Die Fig. 20, 21 zeigen den Feldroboter 101 jeweils in einer Darstellung, wenn daran eine Feldbewirtschaftungseinrichtung 18 mittels eines Roboterarms 23 und einer zugehörigen Laufkatze 20 an dem Chassis 111 des Feldroboters 101 angebracht ist.

Ergänzend oder alternativ zu den Darstellungen gemäß der Fig. 20 und 21 darf an dieser Stelle darauf hingewiesen werden, dass eine Feldbewirtschaftungseinrichtung 19, 19 auch an einer Aussenseite des Chassis 111 angebracht sein kann. Es können auch mehrere Feldbewirtschaftungseinrichtung 18, 19 an mehreren Seiten des Chassis 111 insbesondere unter Verwendung von Laufkatzen 20 angebracht sein, beispielsweise an entgegengesetzten Seiten des Chassis 111.

Im Zusammenhang mit einer Feldbewirtschaftungseinrichtung 18, 19, wie sie in Bezug auf die Fig. 6 und 7 gezeigt und erläutert worden ist, darf an dieser Stelle ergänzend darauf hingewiesen werden, dass sich eine Feldbewirtschaftungseinrichtung 18, 19 in gleicher Weise an der Traverse 12 der Vorrichtung 10, 10' gemäß der Fig. 1-19 als auch an dem mobilen Feldroboter 101 gemäß der Fig. 20, 21 montieren lässt. Vor diesem Hintergrund ergibt sich für eine Feldbewirtschaftungseinrichtung 18, 19 erfindungsgemäß der Vorteil, dass in Bezug auf einerseits die Vorrichtung 10, 10' und andererseits den Feldroboter 101 die Verwendung von gleichen Teilen und - bei Bedarf - auch von gleichen Ersatzteilen hierfür möglich ist.

Die Darstellungen gemäß der Fig. 21 verdeutlicht, dass der Feldroboter 101 ebenfalls mit einem Fördersystem 125 ausgestattet ist, das an dem Chassis 111 oder einem Teil hiervon angebracht ist. Bei der hier gezeigten Ausführungsform ist dieses Fördersystem 25 an einer Oberseite von zwei Grundkörpern 115 angebracht.

Das Fördersystem 125 kann bei dem mobilen Feldroboter 101 mit einem umlaufenden Förderband 152 ausgestattet sein und dient zu dem Zweck, dass damit zumindest eine Kiste 24 bzw. eine Mehrzahl von solchen Kisten 24 in Längs- oder Querrichtung des Chassis 111 bewegt und damit an eine vorbestimmte Position insbesondere angrenzend zu einer an dem Feldroboter 101 montierten Feldbewirtschaftungseinrichtung 18, 19 gebracht werden können. In diesem Zusammenhang versteht sich, dass eine Mehrzahl von solchen Kisten 24 von oben her auf das Förderband 152 aufgesetzt werden können.

Das Förderband 152 ist zweckmäßigerweise aus einem gummierten Material ausgebildet oder weist an seiner Oberfläche ein solch gummiertes Material auf. Dies hat den Vorteil, dass damit ein Verrutschen einer Kiste 24 auf dem Förderband 152 verhindert wird.

Die Bewegungsrichtungen, die mit dem Fördersystem 125 und dessen Förderband 152 für die Kisten 24 realisiert werden können, ist in der Fig. 21 durch einen Doppelpfeil symbolisiert und mit "154" bezeichnet.

Alternativ zu dem gezeigten Förderband 152 kann das Fördersystem 125 bei dem Feldroboter 101 auch einen (nicht gezeigten) Rollgang mit einer Mehrzahl von Tragrollen mit einer jeweils horizontale Drehachse aufweisen, so wie es auch bei der Traverse 12 der Vorrichtung 10, 10' gemäß der Fig. 1-19 der Fall ist. Diesbezüglich können dann eine oder mehrere Kisten 24 auf den Rollgang von oben her aufgesetzt werden, in gleicher Weise wie bei dem Förderband 152. In Bezug auf einen solchen Rollgang, beispielsweise im Hinblick auf dessen Antrieb, darf an dieser Stelle zur Vermeidung von Wiederholungen auf die Erläuterungen zur erfindungsgemäßen Vorrichtung 10, 10' verwiesen werden.

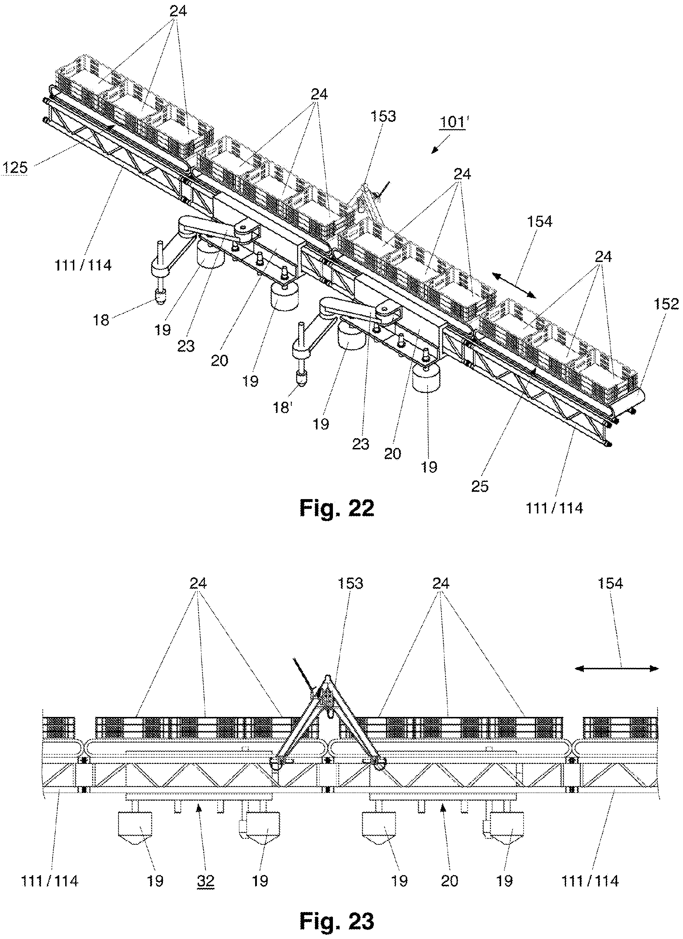

In den Fig. 22 und 23 ist die besagte Plattform 101', die Teil des erfindungsgemäßen Systems 100 ist, nach einer zweiten Variante gezeigt, nämlich in Fig. 22 in einer Perspektivansicht, und in Fig. 23 in einer Seitenansicht hiervon.

Gemäß der zweiten Variante der Plattform 101' ist deren Chassis 111 mit einer Kopplungseinrichtung 153 ausgestattet, mit der das Chassis 111 an einem (nicht gezeigten) Traktor oder einer hiermit vergleichbaren Zugmaschine angebracht bzw. angehängt werden kann. Diese Kopplungseinrichtung 153 ist zweckmäßigerweise an eine Drei-Punkt-Aufnahme eines Traktors angepasst und kann damit an einer solchen Drei-Punkt-Aufnahme angebracht werden.

In gleicher Weise wie bei der ersten Variante gemäß der Fig. 20 und Fig. 21 ist auch die zweite Variante der Plattform 101' nach den Fig. 22 bzw. Fig. 23 mit ihrem Chassis 111 modular aufgebaut und umfasst hierzu eine Mehrzahl von länglichen und insbesondere rohrförmig ausgebildeten Steckelementen 114, die insbesondere ohne Verwendung von speziellem Werkzeug miteinander verbindbar und wieder voneinander lösbar sind. Damit ist es möglich, dass zumindest eine Abmessung des Chassis 111 veränderlich ist. Vorzugsweise handelt es sich bei dieser veränderlichen Abmessung des Chassis 111 um deren Länge, die quer zur Fahrtrichtung des Traktors verläuft. Ergänzend oder alternativ kann es sich bei einer veränderlichen Abmessung des Chassis auch um eine in Fahrtrichtung des Traktors verlaufende Breite des Chassis 111 und/oder eine Höhe des Chassis 111 in vertikaler Richtung handeln.

Bei der zweiten Variante der Plattform 101', die wie vorstehend erläutert an einen Traktor oder der gleichen angehängt werden kann, sind ausweislich der Darstellung von Fig. 22 vier Steckelemente 114 nebeneinander, d.h. in Reihe montiert. Im mittigen Bereich des hierdurch gebildeten Chassis 111, d.h. zwischen dem zweiten und dritten Steckelement 114, umfasst diese Plattform 101' eine Kopplungseinrichtung 153 (vgl. Fig. 23), die an eine Drei-Punkt-Aufnahme angepasst ist, wie sie von Traktoren oder vergleichbaren Maschinen bekannt ist. Entsprechend ist es mit Hilfe dieser Kopplungseinrichtung 153 möglich, die Plattform 101' an einer Drei-Punkt-Aufnahme beispielsweise eines (nicht gezeigten) Traktors zu montieren.

Des Weiteren sind bei der Plattform 101' gemäß der besagten zweiten Variante in einem mittigen Bereich des Chassis 111 zwei Laufkatzen 20 in Verbindung mit zugeordneten Roboterarmen 23 und jeweils daran angebrachten Feldbewirtschaftungseinrichtungen 18 vorgesehen.

In einem oberen Bereich der Plattform 101' gemäß der zweiten Variante, nämlich an einer Oberseite des Chassis 111 und der zugehörigen Steckelemente 114, ist, in gleicher Weise wie bei der Vorrichtung 10, 10' und wie bei dem mobilen Feldroboter 101, ein Fördersystem 125 mit einem umlaufenden Förderband 152 angeordnet. Entsprechend können Kisten 24, wenn sie auf das Förderband 152 aufgesetzt sind, in den beiden Richtungen bewegt werden, die in Fig. 22 mit einem Doppelpfeil 154 symbolisiert sind.

Bezüglich der Funktionsweise einer Feldbewirtschaftungseinrichtung 18 und des Fördersystems 125, die bei der Plattform 101' gemäß der besagten zweiten Variante vorgesehen sind, wird an dieser Stelle hervorgehoben, dass deren Funktionsweise und Vorteile sich von der Vorrichtung 10, 10'bzw. dem mobilen Feldroboter 101 nicht unterscheiden und insoweit zur Vermeidung von Wiederholungen auf die vorherigen Erläuterungen verwiesen werden darf.

Die Perspektivansicht von Fig. 24 zeigt nun das erfindungsgemäße System 100, bei dem die Vorrichtung 10 (oder die Vorrichtung 10') und der mobile Feldroboter 101 in Wechselwirkung miteinander treten. In der Darstellung von Fig. 24 ist zur Vereinfachung die Vorrichtung 10, 10', bei der es sich um eine Ausführungsform gemäß der Fig. 1-19 handeln kann, prinzipiell vereinfacht und lediglich zum Teil gezeigt.

Im Zusammenhang mit dem erfindungsgemäßen System 100 erfüllt die Vorrichtung 10, 10' die Funktion einer Basisstation auf der landwirtschaftlichen Nutzfläche N. Dies bedeutet im Sinne der vorliegenden Erfindung, dass es mittels dieser Vorrichtung 10 einerseits möglich ist, Kisten 24 gezielt an den mobilen Feldroboter 101 zu übergeben. Zu diesem Zweck kann der mobile Feldroboter 101, wie in Fig. 24 gezeigt, derart an einer Stirnseite der Traverse 12 positioniert werden, dass dann durch einen Betrieb des Fördersystems 25 eine Übergabe von zumindest einer Kiste 24, vorzugsweise von einer Mehrzahl von solchen Kisten 24, von der Traverse 12 an den Feldroboter 101 möglich ist. Diese Kisten 24 können aus dem Speicher- bzw. Rollenmagazin der Vorrichtung 10 (bzw. von dem Rollgang 26 des Fördersystems 25) bereitgestellt werden.

Bei den Kisten 24, die der Feldroboter 101 wie erläutert von der Traverse 12 der Vorrichtung 10 erhalten hat, kann es sich beispielsweise um leere Kisten 24 handeln, oder um solche Kisten 24, in denen sich Saatgut befindet, welches dann von dem mobilen Feldroboter 101 und einer daran montierten Feldbewirtschaftungseinrichtung 18, 19 auf der landwirtschaftlichen Nutzfläche N ausgebracht bzw. eingesät wird.

Nachdem der Feldroboter 101 wie erläutert von der Traverse 12 der Vorrichtung 10 zumindest eine Kiste 24, vorzugsweise eine Mehrzahl von solchen Kisten 24, erhalten hat, kann er sich wieder von der Vorrichtung 10 entfernen und "selbstständig" bzw. autonom seiner Arbeit nachgehen. In diesem Zusammenhang wird darauf hingewiesen, dass das erfindungsgemäße Verfahren nicht nur durch die Vorrichtung 10, 10', sondern auch durch den hier beschriebenen mobilen Feldroboter 101 durchgeführt werden kann.

Für das erfindungsgemäße System 100 wird weiterhin darauf hingewiesen, dass der mobile Feldroboter 101, wenn sich nach Durchführung von pflanzenbaulichen Prozessschritten in die Kisten 24, die sich auf dem Feldroboter 101 befinden, Erntegut von Pflanzen P eingebracht worden ist, dann erneut in eine Position angrenzend zu einer Stirnseite der Traverse 12 der Vorrichtung 10 bewegt werden kann, wie sie in der Fig. 24 gezeigt ist. Dies erfolgt dann zu dem Zweck, dass die mit Erntegut gefüllten Kisten 24 von dem Feldroboter 101 an die Traverse 12 der Vorrichtung 10 zurückgegeben werden, so dass damit diese Kisten über das Fördersystem 25 der Vorrichtung 10 an bzw. in das Speicher- bzw. Rollenmagazin der Vorrichtung 10 (bzw. auf den Rollgang 26) gelangen können. Im Anschluss hieran erfolgt dann ein weiteres Handling dieser mit Erntegut gefüllten Kisten 24, beispielsweise das Verladen auf Transportfahrzeuge, wie es im Zusammenhang mit der Fig. 4 bereits erläutert worden ist.

Wie vorstehend bereits erläutert, kann zumindest ein Fördersystem sowohl bei der Vorrichtung 10, 10' als auch bei dem mobilen Feldroboter 101 vorgesehen sein. Ggf. können die Vorrichtung 10, 10' und/oder der mobile Feldroboter 101 bzw. die Plattform 101' gemäß ihrer zweiten Variante jeweils mit einer Mehrzahl von solchen Fördersystemen ausgestattet sein, die dann vertikal übereinander und/oder horizontal nebeneinander angeordnet sein können. Jedenfalls wird mit einem solchen Fördersystem 25, 125 erreicht, dass zumindest eine Kiste 24, vorzugsweise eine Mehrzahl von solchen Kisten 24, stets an eine vorbestimmte Position der Traverse 12 der Vorrichtung 10, 10' bzw. des Chassis 111 des Feldroboters 101 bewegt werden kann bzw. können, in welcher Position dann eine Wechselwirkung mit einer an einem Roboterarm 23 angebrachten Feldbewirtschaftungseinrichtung 18, 19 möglich ist. Unter einer solchen Wechselwirkung ist im Sinne der vorliegenden Erfindung zu verstehen, dass von einer Feldbewirtschaftungseinrichtung 18, 19 entweder aus einer Kiste 24 gezielt Dinge herausgenommen werden, beispielsweise Samen, Setzlinge, Jungpflanzen oder dergleichen, oder dass von einer Feldbewirtschaftungseinrichtung 18, 19 im Zuge eines Ernteprozessschritts Erntegut gezielt in eine Kiste 24 eingebracht wird. Wie vorstehend an anderer Stelle bereits erläutert, kann dieses Erntegut auch von verschiedenen Pflanzen bzw. Sorten stammen, nämlich für den Fall, dass auf der landwirtschaftlichen Nutzfläche N ein "gemischter Anbau" von Pflanzen bzw. Gemüse vorgenommen wird. Somit ist es möglich, mit der vorliegenden Erfindung Erntegut von verschiedenen Pflanzen P in eine gemeinsame hierzu vorgesehenen Kiste 24 einzubringen.

Falls im Zuge der Ernte die Kisten 24, die sich auf dem Fördersystem 25 der Vorrichtung 10, 10' oder der Plattform 101, 101' befinden, vollständig mit Erntegut gefüllt sind, kann hierbei erfindungsgemäß vorgesehen sein, dass dieser Füllstand durch geeignete Sensoren erfasst wird. Für diesen Fall können in Bezug auf die Vorrichtung 10 diese vollen Kisten 24 mittels des Fördersystems 25 an eine Position des Speicher- bzw. Rollenmagazins (bzw. den Rollgang 26) bewegt werden, an der die gefüllten Kisten 24 zur weiteren Verarbeitung bzw. Logistik beispielsweise an Transportfahrzeuge übergeben werden können. In Bezug auf den mobilen Feldroboter 101 wird in diesem Fall (d.h. bei der Erkennung von gefüllten Kisten 24) der Feldroboter 101 wie erläutert wieder an eine Stirnseite der Traverse 12 der Vorrichtung 10, 10' herangefahren, so dass eine Rückgabe von gefüllten Kisten 24, die sich auf dem Feldroboter 101 befinden, an die Traverse 12 der Vorrichtung 10, 10' zurückgegeben werden können. Damit erfüllt bzw. übernimmt dann die Vorrichtung 10, 10' die Funktion einer Basisstation. Gleiches gilt für den Fall einer Plattform 101' gemäß der zweiten Variante, die an einen Traktor angehängt wird.

Im Anschluss hieran ist es dann möglich, dass leere Kisten 24 auf dem Rollgang 26 des Fördersystems 25 (erneut) bereitgestellt werden und/oder aus dem besagten Speicher- bzw. Rollenmagazin des Fördersystems 25 (bzw. von dem Rollgang 26) erneut an den mobilen Feldroboter 101 übergeben werden, so dass damit von der Vorrichtung 10, 10' und/oder von der Plattform (z.B. in Form eines mobilen Feldroboters 101) weitere pflanzenbaulichen Prozessschritte ausgeführt werden können.

Die vorstehende Erläuterung des erfindungsgemäßen Systems 100, die für das Beispiel des Einsatzes einer Plattform gemäß der ersten Variante in Form des mobilen Feldroboters 101 gegeben worden ist, gilt mutatis mutandis auch für die zweite Variante der Plattform 101', die an einen Traktor oder dergleichen angehängt werden kann. Im Zusammenhang damit, dass diese Plattform 101' in eine Position angrenzend zur Traverse 12 bewegt werden kann, an der eine Übergabe von Kisten 24 von der Traverse 12 an bzw. auf die Plattform 101' oder aber ein Empfang von mit Erntegut gefüllten Kisten auf der Traverse 12 aus Richtung der Plattform 101' möglich ist, ist hinsichtlich der Plattform 101' gemäß der zweiten Variante zu verstehen, dass dies mit dem Bewegen des Traktors, an dem die Plattform 101' gemäß der zweiten Variante angebracht bzw. angehängt ist, in diese besagte Position angrenzend zur Traverse 12 der Vorrichtung 10, 10' realisiert wird.

Schließlich wird in Bezug auf das erfindungsgemäße System 100 hervorgehoben, dass dies auch mit einer Mehrzahl von Plattformen 101, 101' ausgestattet sein kann. Dies bedeutet, dass dann eine Mehrzahl von mobilen Feldrobotern 101 zum Einsatz kommen können, die jeweils, vorzugsweise abwechselnd, in eine Position angrenzend zur Traverse 12 bewegt werden können, um dort Kisten 24 von der Traverse 12 zu empfangen oder an die Traverse 12 abzugeben. Mutatis mutandis gilt dies auch für eine Mehrzahl von verschiedenen Plattformen 101' gemäß der zweiten Variante, die an unterschiedlichen Traktoren oder dergleichen angebracht sein können.

### Bezugszeichenliste

- 10, 10': Vorrichtung
- 12: (Haupt-)Traverse
- 13: Nebentraverse
- 14: stationäre Mittelsäule
- 16: Fahrwerk (mit Rädern)
- 17: Drehgelenk
- 18, 19: Feldbewirtschaftungseinrichtung(en)
- 20: Laufkatze
- 21: Mitnahmeeinrichtung
- 22: Führungsschiene
- 23: Roboterarm
- 24: Kiste(n)
- 25: Fördersystem
- 26: Rollgang
- 27: Tragrolle(n)
- 28: Stoppelement
- 29: Basisterminal
- 30: erster Sensor
- 32: zweiter Sensor
- 34: Wetterstation
- 36: Sende-/Empfangseinheit
- 38: Steuer- oder Regeleinrichtung
- 40: Kabeltrommel
- 50: Halteplatte
- 100: System
- 101: Plattform, als Teil eines mobilen Feldroboters
- 101': Plattform, zum Anhängen bzw. Anbringen an einen Traktor
- 111: Chassis
- 112: Räder
- 114: Steckelemente
- 115: L-förmiger Grundkörper
- 124: Kastenelement
- 125: Fördersystem (der Plattform 101, 101')
- 133: Halteplatte bzw. "Parkbereich"
- 140: Sende-/Empfangseinheit
- 141: Wetterstation
- 142: Steuer- oder Regeleinrichtung
- 143: Batterie
- 152: umlaufendes Förderband
- 153: Kopplungseinrichtung
- 154: Bewegungsrichtung (für eine Kiste 24)
- B: Batteriespeicher
- F: Fahrspur
- H: Horizontale
- M: Motor
- N: landwirtschaftliche Nutzfläche
- P: Pflanze(n)
- R: Überwachungsraum (des ersten bzw. zweiten Sensors 30, 32)
- S: Solarpanel
- W: Werkzeugwechselsystem

## Patentansprüche

1. Vorrichtung (10; 10') zur Bewirtschaftung einer landwirtschaftlichen Nutzfläche (N), umfassend
zumindest eine längliche Traverse (12) und ein zugeordnetes Fahrwerk (16) mit zumindest einem Rad, mit dem die Traverse (12) kreisförmig oder linear über die Nutzfläche (N) verfahrbar ist,
zumindest eine Feldbewirtschaftungseinrichtung (18, 19), die entlang der Traverse (12) beweglich bzw. verfahrbar ist,
zumindest eine Kiste (24), vorzugsweise eine Mehrzahl von solchen Kisten (24),
eine Mehrzahl von an der Traverse (12) vorgesehenen Laufkatzen (20), die an zugeordneten Führungsschienen (22) der Traverse (12) angebracht und somit entlang der Traverse (12) in Richtung von deren Längserstreckung beweglich sind, wobei an einer jeweiligen Laufkatze (20) zumindest eine Feldbewirtschaftungseinrichtung (18, 19) angebracht ist und somit die Laufkatzen (20) jeweils als Geräteträger für eine Feldbewirtschaftungseinrichtung (18, 19) dienen, wobei die Mehrzahl von Laufkatzen (20) mit zumindest einer daran angebrachten Feldbewirtschaftungseinrichtung (18, 19) an entgegengesetzten Seiten der Traverse (12) vorgesehen sind, vorzugsweise, dass die Mehrzahl von Laufkatzen (20) mit den daran angebrachten Feldbewirtschaftungseinrichtungen (18, 19) unabhängig voneinander bewegbar sind,
**dadurch gekennzeichnet,**
**dass** ein Fördersystem (25) an der Traverse (12) entlang von deren Längserstreckung vorgesehen ist, wobei zumindest eine Kiste (24), vorzugsweise die Kisten (24), mit dem Fördersystem (25) entlang der Längserstreckung der Traverse (12) in eine bestimmte Richtung bewegbar und damit an eine vorbestimmte Position angrenzend zu einer Feldbewirtschaftungseinrichtung (18, 19) bringbar ist bzw. sind,
**dass** an zumindest einer Laufkatze (20) gleichzeitig verschiedene Typen von Feldbewirtschaftungseinrichtungen (18, 19) montiert sind und somit die Laufkatze (20) als Geräteträger für diese verschiedenen Typen von Feldbewirtschaftungseinrichtungen (18, 19) dient.

2. Vorrichtung (10; 10') nach Anspruch 1, **dadurch gekennzeichnet, dass** die Traverse (12) und/oder das Fördersystem (25) mit einem Speicher- bzw. Rollenmagazin ausgestattet ist/sind, in dem eine Mehrzahl von Kisten (24) oder dergleichen aufnehmbar sind, vorzugsweise, dass in dem Speicher- bzw. Rollenmagazin eine Anzahl von > 10 Kisten (24) aufnehmbar sind, weiter vorzugsweise, dass in dem Speicher- bzw. Rollenmagazin eine Anzahl von > 20 Kisten (24) aufnehmbar sind, weiter vorzugsweise, dass in dem Speicher- bzw. Rollenmagazin eine Anzahl von > 50 Kisten (24) aufnehmbar sind.

3. Vorrichtung (10; 10') nach Anspruch 1 oder 2, **dadurch gekennzeichnet, dass** das Fördersystem (25) einen Rollgang (26) mit einer Mehrzahl von Tragrollen (27) mit einer jeweils horizontalen Drehachse aufweist, wobei zumindest eine Kiste (24) auf die Tragrollen (27) des Rollgangs (26) aufsetzbar ist, vorzugsweise, dass der Rollgang (26) auch eine Mehrzahl von Führungsrollen mit jeweils einer vertikalen Drehachse aufweist, wobei die Führungsrollen jeweils seitlich an dem Rollgang (26) angeordnet sind und somit den Rollgang (26) zur Seite hin begrenzen, weiter vorzugsweise, dass zumindest eine Rolle des Rollgangs (26) motorisch angetrieben ist, um dadurch einen Transport einer Kiste (24) in einer gewünschten Richtung entlang der Traverse (12) zu erreichen, vorzugsweise, dass eine motorisch angetriebene Rolle aus einer Tragrolle (27) besteht.

4. Vorrichtung (10; 10') nach einem der vorhergehenden Ansprüche, **dadurch gekennzeichnet, dass** das Fördersystem (25) eine Mitnahmeeinrichtung (21) aufweist, die in Wechselwirkung mit einer Kiste (24) bringbar ist, um damit die Kiste (24) entlang der Längserstreckung der Traverse (12) in eine bestimmte Richtung zu bewegen, wobei an zugeordneten Führungsschienen (22) der Traverse (12) zumindest eine entlang einer Längserstreckung der Traverse (12) beweglich daran verfahrbare Laufkatze (20) angebracht ist, an der die Mitnahmeeinrichtung (21) vorgesehen ist.

5. Vorrichtung (10; 10') nach einem der vorhergehenden Ansprüche, **gekennzeichnet durch** ein Werkzeugwechselsystem (W), das vorzugsweise an der Traverse (12) angebracht oder vorgesehen ist, wobei an oder in dem Werkzeugwechselsystem (W) eine Mehrzahl von unterschiedlichen Feldbewirtschaftungseinrichtungen (18, 19) anbringbar oder aufnehmbar sind und bei Bedarf an zumindest einem Roboterarm (23) eine Feldbewirtschaftungseinrichtung (18, 19) gegen eine andere Feldbewirtschaftungseinrichtung (18, 19) austauschbar ist, vorzugsweise, dass das Werkzeugwechselsystem (W) an einer zugeordneten Führungsschiene (22) der Traverse (12) angebracht und somit entlang der Traverse (12) in Richtung von deren Längserstreckung beweglich ist.

6. Vorrichtung (10; 10') nach einem der vorhergehenden Ansprüche, **gekennzeichnet durch** eine Steuer- oder Regelungseinrichtung (39), mit der eine Bewegung der Traverse (12) über die Nutzfläche (N) und/oder eine Aktuierung von zumindest einer Feldbewirtschaftungseinrichtung (18, 19) steuer- oder regelbar sind, wobei mittels einer Sende-/Empfangseinheit (36), die signaltechnisch mit der Steuer- oder Regelungseinrichtung (38) verbunden ist, Informationen bzw. Datenpakete zur Überwachung und/oder Steuerung des Betriebs der Traverse (12) und/oder von daran angebrachten bzw. vorgesehenen Feldbewirtschaftungseinrichtungen (18, 19) entweder von einer entfernten Stelle insbesondere in Form eines Leitstands empfangbar und/oder an eine solche entfernte Stelle sendbar sind, vorzugsweise, dass die Sende-/Empfangseinheit (36) an der Traverse (12) angebracht ist.

7. Verfahren zum Bewirtschaften einer landwirtschaftlichen Nutzfläche (N), wobei das Verfahren vollautomatisch durchgeführt wird und zugehörige pflanzenbauliche Prozessschritte von der Ein- bzw. Aussaat der Pflanzen bis zu deren Ernte umfasst, wobei im Zuge der Ernte eine vorbestimmte Menge von Erntegut maschinell in eine hierzu vorgesehene Kiste (24) eingebracht wird, wobei auf der landwirtschaftlichen Nutzfläche (N) eine Punkt-Bewirtschaftung realisiert wird, bei der eine Bewirtschaftung der Nutzfläche (N) sich lediglich auf gezielte Pflanzpunkte konzentriert, an denen Pflanzen in den Boden eingebracht sind, wobei an den gezielten Pflanzpunkten die Einsaat der Pflanzen, eine Bewässerung und/oder das Ernten der ausgereiften Pflanzen erfolgt,
**dadurch gekennzeichnet,**
**dass** auf der gleichen landwirtschaftlichen Nutzfläche (N) verschiedene Pflanzen (P) in Form eines gemischten Anbaus eingesät bzw. geerntet werden, wobei pflanzenbauliche Anbau- und Ernteprozesse als Pick-and-Place Prozesse abgebildet werden und diese Pick-and-Place Prozesse kulturübergreifend, d.h. für verschiedene Arten und Größen von Gemüsepflanzen durchgeführt werden, wobei beim Einbringen der Ernte mittels einer Feldbewirtschaftungseinrichtung (18, 19) das Erntegut von unterschiedlichen Arten von Pflanzen (P) zusammen in eine gemeinsame Kiste (24) eingebracht wird.

8. Verfahren nach Anspruch 7, **dadurch gekennzeichnet, dass** hierbei nicht verzehrbare Biomasse von den zu erntenden Pflanzen insbesondere mit einer Feldbewirtschaftungseinrichtung (18, 19) einer Vorrichtung (10; 10') nach einem der Ansprüche 1 bis 6 abgetrennt wird, vorzugsweise, dass ein Abtrennen von nicht verzehrbarer Biomasse in einem Stadium der Pflanze erfolgt, währenddessen sie noch in der landwirtschaftlichen Nutzfläche (N) angebracht ist, weiter vorzugsweise, dass ein Abtrennen von nicht verzehrbarer Biomasse im Zuge eines Prozessschritts erfolgt, wenn die Pflanze bei der Ernte aus dem Boden ausgebracht wird, weiter vorzugsweise, dass ein solches Zerlegen von Pflanzen und/oder ein Abtrennen von nicht verzehrbarer Biomasse durch einen vorzugsweise optischen Sensor unterstützt wird, mit dem eine Feldbewirtschaftungseinrichtung (18, 19) bzw. eine zugeordnete Laufkatze (20) einer Vorrichtung (10; 10') nach einem der Ansprüche 1-6 ausgestattet ist und damit dann die Pflanze und deren Position und/oder Größe erfasst werden.

9. Verfahren nach Anspruch 7 oder 8, **dadurch gekennzeichnet, dass** eine landwirtschaftliche Nutzfläche (N) mit verschiedenen Sorten von Pflanzen bzw. Gemüsen bewirtschaftet wird, die aus der Gruppe bestehend aus Eisberg-, Kopf- und Romanasalat, Rot- und Weißkohl, Broccoli, Kohlrabi, Sellerie, Gurken, Zucchini und/oder Kürbis ausgebildet sind, so dass damit auf der landwirtschaftlichen Nutzfläche (N) ein gemischter Anbau von Pflanzen bzw. Gemüse erfolgt.

10. Verfahren nach einem der Ansprüche 7 bis 9, **dadurch gekennzeichnet, dass** dieses Verfahren unter Verwendung einer Vorrichtung (10; 10') nach einem der Ansprüche 1 bis 6 durchgeführt wird.

11. Verfahren nach einem der Ansprüche 7 bis 10, **dadurch gekennzeichnet, dass** dieses Verfahren unter Verwendung von zumindest einer relativ zur landwirtschaftlichen Nutzfläche (N) bewegbaren Plattform (101, 101') durchgeführt wird mit zumindest einer Feldbewirtschaftungseinrichtung (18; 19), die an einem Chassis (111) der Plattform (101, 101') oder einem Teil davon angebracht ist und mit der zumindest ein pflanzenbaulicher Prozessschritt durchgeführt wird, wobei an dem Chassis (111) der Plattform (101, 101') oder einem Teil davon ein Fördersystem (125) angebracht ist, mit dem zumindest eine Kiste (24) in Längs- und/oder Querrichtung des Chassis (111) der Plattform (101, 101') bewegt und damit an eine vorbestimmte Position insbesondere angrenzend zu einer Feldbewirtschaftungseinrichtung (30, 31a, 31b) gebracht wird.

12. Verfahren nach Anspruch 11, **dadurch gekennzeichnet, dass** die Plattform (101, 101') angrenzend zur Traverse (12) der Vorrichtung (10; 10') in eine Position gebracht wird, derart, dass damit dann Kisten (24) entweder von der Traverse (12) an die Plattform (101, 101') übergeben werden oder von der Plattform (101, 101') an die Traverse (12) zurückgegeben werden.

13. System (100) zur Bewirtschaftung einer landwirtschaftlichen Nutzfläche (N), umfassend
eine Vorrichtung (10; 10') nach einem der Ansprüche 1 bis 6, welche die Funktion einer Basisstation auf einer landwirtschaftlichen Nutzfläche erfüllt, und
zumindest eine relativ zur landwirtschaftlichen Nutzfläche (N) bewegbare Plattform (101, 101'), die separat von der Vorrichtung (10, 10') vorgesehen ist und mindestens eine Feldbewirtschaftungseinrichtung (18; 19) aufweist, die an einem Chassis (111) der Plattform (101, 101') oder einem Teil davon angebracht ist und mit der ein pflanzenbaulicher Prozessschritt durchführbar ist,
wobei an dem Chassis (111) der Plattform (101, 101') oder einem Teil davon ein Fördersystem (125) angebracht ist, mit dem zumindest eine Kiste (24) in Längs- und/oder Querrichtung des Chassis (111) bewegbar und damit an eine vorbestimmte Position insbesondere angrenzend zu einer Feldbewirtschaftungseinrichtung (18, 19) bringbar ist,
wobei die Plattform (101, 101') angrenzend zur Traverse (12) der Vorrichtung (10; 10') in eine Position bringbar ist, derart, dass die Plattform (101, 101') von der Traverse (12) Kisten (24) übernehmen kann oder solche Kisten (24), die dann mit Erntegut von Pflanzen (P) gefüllt sind und sich auf der Plattform (101, 101') befinden, an bzw. auf die Traverse (12) zurückgebbar sind, und
wobei die Plattform Teil eines mobilen Feldroboters (101) ist und an deren Chassis (111) eine Mehrzahl von daran angebrachten Rädern (112) vorgesehen sind, mit denen der Feldroboter (101) über die Nutzfläche (N) verfahrbar ist, wobei zumindest eines der Räder (112) mit einem Antrieb versehen ist, wobei zumindest ein Rad (112) um eine vertikale Achse an dem Chassis (111) schwenk- bzw. drehbar gelagert sind, um für den mobilen Feldroboter (101) eine Änderung seiner Fahrtrichtung zu ermöglichen.

14. System (100) nach Anspruch 13, **dadurch gekennzeichnet, dass** das Chassis (111) der Plattform (101, 101') modular aufgebaut ist und hierzu eine Mehrzahl von länglichen und insbesondere rohrförmig ausgebildeten Steckelementen (114) umfasst, wobei diese Steckelemente (114) insbesondere ohne Verwendung von speziellem Werkzeug miteinander verbindbar und wieder voneinander lösbar sind, derart, dass zumindest eine Abmessung des Chassis (111) veränderlich ist.

15. System (100) nach Anspruch 13 oder 14, **dadurch gekennzeichnet, dass** in Bezug auf die Plattform (101, 101') an zugeordneten Führungsschienen (22) des Chassis (111) zumindest eine Laufkatze (20) angebracht ist, die entlang einer Längserstreckung der Plattform (101, 101') beweglich daran verfahrbar ist, wobei an der Laufkatze (20) zumindest eine Feldbewirtschaftungseinrichtung (18, 19) angebracht ist und somit die Laufkatze (20) als Geräteträger für eine Feldbewirtschaftungseinrichtung (18, 19) dient.

16. System (100) nach einem der Ansprüche 13 bis 15, **dadurch gekennzeichnet, dass** das Fördersystem (125) eine Mitnahmeeinrichtung (21) aufweist, die in Wechselwirkung mit einer Kiste (24) bringbar ist, um damit die Kiste (24) entlang der Längserstreckung der Plattform (101, 101') in eine bestimmte Richtung zu bewegen, wobei an zugeordneten Führungsschienen (22) der Plattform (101, 101') zumindest eine beweglich daran verfahrbare Laufkatze (20) angebracht ist, an der die Mitnahmeeinrichtung (21) vorgesehen ist.

## Claims

1. Assembly (10; 10') for the management of an agricultural area (N), comprising at least one elongated truss (12) and an associated chassis (16) with at least one wheel with which the truss (12) can be moved in a circular or linear manner over the agricultural area (N);
at least one field management device (18, 19) that is movable or displaceable along the truss (12),
at least one crate (24), preferably a plurality of such crates (24), and
a plurality of carriages (20) provided on the truss (12), which are attached to associated guide rails (22) of the truss (12) and are thus movable along the truss (12) in the direction of its longitudinal extension, wherein at least one field management device (18, 19) is attached to each carriage (20) and thus the carriages (20) each serve as tool carriers for a field management device (18, 19), wherein the plurality of carriages (20) are provided with at least one attached field management device (18, 19) on opposite sides of the truss (12), preferably that the plurality of carriages (20) with the field management devices (18, 19) attached to them can be moved independently of each other, **characterized in that**
a conveyor system (25) is provided on the truss (12) along its longitudinal extension, wherein at least one crate (24), preferably the crates (24), can be moved with the conveyor system (25) along the longitudinal extension of the truss (12) in a specific direction and thus to a predetermined position adjacent to a field management device (18, 19), and
that at the same time different species of field management devices (18, 19) are mounted on at least one carriage (20) and thus the carriage (20) serves as a tool carrier for these different species of field management devices (18, 19).

2. Assembly (10; 10') according to claim 1, **characterized in that** the truss (12) and / or the conveyor system (25) is / are equipped with a storage or roller magazine, in which a plurality of crates (24) or the like can be accommodated, preferably that a number of > 10 crates (24) can be accommodated in the storage or roller magazine, further preferably that in the storage or roller magazine a number of > 20 crates (24) can be accommodated, further preferably that a number of > 50 crates (24) can be accommodated in the storage or roller magazine.

3. Assembly (10; 10') according to claim 1 or 2, **characterized in that** the conveyor system (25) has a roller table (26) with a plurality of carrier rollers (27), each with a horizontal axis of rotation, wherein at least one crate (24) can be placed on the carrier rollers (27) of the roller table (26), preferably that the roller table (26) also has a plurality of guide rollers, each with a vertical axis of rotation, wherein the guide rollers are each arranged on the side of the roller table (26) and thus limit the roller table (26) to the side, further preferably that at least one roller of the roller table (26) is motor-driven in order to achieve a transport of a crate (24) in a desired direction along the truss (12), further preferably that a motor-driven roller consists of a carrier roller (27).

4. Assembly (10; 10') according to any one of the preceding claims, **characterized in that** the conveyor system (25) has a support (21) which can be brought into interaction with a crate (24) in order to move the crate (24) along the longitudinal extension of the truss (12) in a specific direction, wherein at least one carriage (20), on which the support (21) is provided and which can be moved along a longitudinal extension of the truss (12), is provided on associated guide rails (22) of the truss (12).

5. Assembly (10; 10') according to any one of the preceding claims, **characterized by** a tool change system (W) which is preferably mounted or provided on the truss (12), wherein a plurality of different field management devices (18, 19) can be attached or mounted on or in the tool change system (W) and, if necessary, that on at least one robotic arm (23) at least one field management device (18, 19) is interchangeable with another field management device (18, 19), preferably that the tool change system (W) is attached to an associated guide rail (22) of the truss (12) and is thus movable along the truss (12) in the direction of its longitudinal extension.

6. Assembly (10; 10') according to any one of the preceding claims, **characterized by** a control or regulating apparatus (39) by means of which a movement of the truss (12) over the agricultural area (N) and / or an actuation of at least one field management device (18, 19) can be controlled or regulated, wherein, by means of a transmitter / receiver unit (36), which is signally connected to the control and regulating apparatus (38), information or data packets for monitoring and / or controlling of the operation of the truss (12) and / or field management devices (18, 19) attached to it or provided there can be either received from remote location, in particular in the form of a control station, and/or transmitted to such a remote location, preferably that the transmitter / receiver unit (36) is attached to the truss (12).

7. Method for the management of an agricultural area (N), wherein the method is carried out fully automatically and includes associated crop management process steps of planting or sowing the plants until they are harvested, wherein a predetermined quantity of harvested crops is mechanically placed in a crate (24) provided for this purpose in the course of harvesting, wherein spot farming is carried out on the agricultural area (N), in which the management of the agricultural area (N) only focuses on targeted planting points where plants are introduced into the ground, wherein the targeted planting points are used for sowing the plants, irrigating and / or harvesting the mature plants,
**characterized in**
**that** on the same agricultural area (N), different plants (P) are sown or harvested in the form of mixed management, wherein plant management and harvesting processes are mapped as pick-and-place processes, and these pick-and-place processes are carried out across crops, i.e., for different species and sizes of vegetable plants, wherein, when the harvest is brought in, the harvested crop of different species of plants (P) is placed together in a common crate (24) by means of a field management device (18, 19).

8. Method according to claim 7, **characterized in that** non-edible biomass from the plants to be harvested is, in particular, separated by a field management device (18, 19) of an assembly (10; 10') according to any one of claims 1 to 6, preferably that the separation of non-edible biomass takes place at a stage of the plant while it is still attached into the agricultural area (N), further preferably that a separation of non-edible plants takes place in the course of a process step when the plant is removed from the ground, further preferably, that such a cutting of plants and / or separation of non-edible biomass is supported by a preferably optical sensor fitted to a field management device (18, 19) or an associated carriage (20) of an assembly (10; 10') according to any one of claims 1 to 6, thereby detecting the plant and its position and / or size.

9. Method according to claim 7 or 8, **characterized in that** an agricultural area (N) with different species of plants and vegetables is managed, consisting of a group formed by iceberg, butterhead and romaine lettuce, red cabbage and white cabbage, broccoli, kohlrabi, celery, cucumbers, zucchini and / or pumpkin, so that a mixed management of plants or vegetables takes place on the agricultural area (N).

10. Method according to any one of claims 7 to 9, **characterized in that** this method is carried out using an assembly (10; 10') according to any one of claims 1 to 6.

11. Method according to any one of claims 7 to 10, **characterized in that** this method is carried out using at least one platform (101, 101') which is movable relative to the agricultural area (N), with at least one field management device (18; 19) attached to a chassis (111) of the platform (101, 101') or part thereof, and with which at least one crop management process step is carried out, wherein a conveyor system (125) is attached to the chassis (111) of the platform (101, 101') or part thereof, by means of which at least one crate (24) is moved longitudinally and / or transversely of the chassis (111) of the platform (101, 101') and thus placed in a predetermined position, in particular adjacent to a field management device (30, 31a, 31b).

12. Method according to claim 11, **characterized in that** the platform (101, 101') adjacent to the truss (12) of the assembly (10; 10') is brought into a position in such a way that crates (24) can be transferred back either from the truss (12) to the platform (101, 101') or from the platform (101, 101') to the truss (12).

13. System (100) for the management of an agricultural area (N), comprising an assembly (10; 10') according to any one of claims 1 to 6 which fulfils the function of a base station on an agricultural area, and
at least one platform (101, 101') movable relative to the agricultural area (N), which is provided separately from the assembly (10, 10') and which has at least one field management device (18; 19) attached to a chassis (111) of the platform (101, 101') or part thereof, with which a crop management process step can be carried out,
wherein a conveyor system (125) is attached to the chassis (111) of the platform (101, 101') or a part thereof, wherein with the conveyor system (125) at least one crate (24) can be moved in the longitudinal and / or transverse direction of the chassis (111) and thus can be brought to a predetermined position, in particular adjacent to a field management device (18, 19),
wherein the platform (101, 101') can be placed in a position adjacent to the truss (12) of the assembly (10; 10') in such a way that the platform (101, 101') can receive crates (24) from the truss (12) or return to the truss (12) such crates (24) which are filled with crops of plants (P) and are on the platform (101, 101'), and
wherein the platform is part of a mobile field robot (101), wherein a plurality of wheels (112) are attached to its chassis (111) with which the field robot (101) can be moved over the agricultural area (N), wherein at least one of the wheels (112) is equipped with a drive, wherein at least one wheel (112) is mounted about a vertical axis on the chassis (111) so as to swivel or rotate to allow for the mobile field robot (101) to change its direction of travel.

14. System (100) according to claim 13, **characterized in that** the chassis (111) of the platform (101, 101') is modular and comprises a plurality of elongated and in particular tubular plug-in elements (114) for this purpose, wherein these plug-in elements (114) can be connected to each other and can be separated from each other, in particular, without the use of special tools, in such a way that at least one dimension of the chassis (111) is variable.

15. System (100) according to claim 13 or 14, **characterized in that**, in relation to the platform (101, 101'), at least one carriage (20) is attached to associated guide rails (22) of the chassis (111), which is movable along a longitudinal extension of the platform (101, 101'), wherein at least one field management device (18, 19) is attached to the carriage (20) and thus the carriage (20) serves as a tool carrier for a field management device (18, 19).

16. System (100) according to any one of claims 13 to 15, **characterized in that** the conveyor system (125) has a support (21) which can be brought into interaction with a crate (24) in order to move the crate (24) along the longitudinal extension of the platform (101, 101') in a specific direction, wherein on associated guide rails (22) of the platform (101, 101') at least one movable carriage (20) is attached, on which the support (21) is provided.

## Revendications

1. Dispositif (10; 10') de gestion d'une zone agricole (N), comprenant
au moins une traverse allongée (12) et un châssis associé (16) avec au moins une roue permettant de déplacer la traverse (12) de manière circulaire ou linéaire sur la surface agricole (N) circulaire ou linéaire sur la zone agricole (N),
au moins un dispositif de gestion de champ (18, 19), qui est mobile ou déplaçable le long de la traverse (12),
au moins une caisse (24), de préférence une pluralité de telles caisses (24),
une pluralité de chariots (20) prévus sur la traverse (12), qui sont montés sur des rails de guidage (22) associés de la traverse (12) et sont ainsi mobiles le long de la traverse (12) dans le sens de son extension longitudinale, au moins un dispositif de gestion de champ (18, 19) étant monté sur un chariot (20) respectif et les chariots (20) servant ainsi chacun de porte-outils pour un dispositif de gestion de champ (18, 19), dans lequel la pluralité de chariots (20) avec au moins un dispositif de gestion de champ (18, 19) étant monté sur ceux-ci sont prévus sur des côtés opposés de la traverse (12), de préférence que la pluralité de chariots (20) avec les dispositifs de gestion de champ (18, 19) montés sur ceux-ci peuvent être déplacés indépendamment les uns des autres,
**caractérisé**
**en ce qu'**un système de transport (25) est prévu sur la traverse (12) le long de son extension longitudinale, dans lequel au moins une caisse (24), de préférence les caisses (24), peuvent être déplacées avec le système de transport (25) le long de l'extension longitudinale de la traverse (12) dans une certaine direction et peuvent ainsi être amenée dans une position prédéterminée adjacente à un dispositif de gestion de champ (18, 19), et
**en ce que** différents types de dispositifs de gestion des champs (18; 19) sont montés simultanément sur au moins un chariot (20) et ainsi le chariot (20) sert de porte-outils pour ces différents types de dispositifs de gestion des champs (18, 19).

2. Dispositif (10; 10') selon la revendication 1, **caractérisé en ce que** la traverse (12) et/ou le système de transport (25) est équipé d'un magasin de stockage ou de rouleaux, dans lequel une pluralité de caisses (24) ou autres peuvent être logées, de préférence qu'un nombre > 10 caisses (24) peuvent être logées dans le magasin de stockage ou de rouleaux, de préférence encore qu'un nombre > 20 caisses (24) peuvent être logées dans le magasin de stockage ou de rouleaux, de préférence encore qu'un nombre > 50 caisses (24) peuvent être logées dans le magasin de stockage ou de rouleaux.

3. Dispositif (10; 10') selon la revendication 1 ou 2, **caractérisé en ce que** le système de transport (25) comporte une table à rouleaux (26) avec une pluralité de rouleaux porteurs (27) ayant chacun un axe de rotation horizontal, au moins une caisse (24) pouvant être placée sur les rouleaux porteurs (27) de la table à rouleaux (26), de préférence **en ce que** la table à rouleaux (26) comporte également une pluralité de rouleaux de guidage ayant chacun un axe de rotation vertical de guidage sont disposés latéralement sur la table à rouleaux (26) et délimitent ainsi la table à rouleaux (26) sur le côté, de préférence encore **en ce qu'**au moins un rouleau de la table à rouleaux (26) est entraîné par un moteur, afin de permettre ainsi le transport d'une caisse (24) dans une direction souhaitée le long de la traverse (12), de préférence **en ce qu'**un rouleau entraîné par un moteur consiste en un rouleau porteur (27).

4. Dispositif (10; 10') selon l'une des revendications précédentes, **caractérisé en ce que** le système de transport (25) comporte un dispositif d'entraînement (21) qui peut être amené à interagir avec une caisse (24) pour déplacer ainsi la caisse (24) le long de l'extension longitudinale de la traverse (12) dans une direction déterminée, dans lequel au moins un chariot (20), sur lequel le dispositif d'entraînement (21) est monté, est prévu sur des rails de guidage associés (22) de la traverse (12) et peut être déplacé le long d'une extension longitudinale de la traverse (12).

5. Dispositif (10; 10') selon l'une des revendications précédentes, **caractérisé par** un système de changement d'outil (W) qui est de préférence monté ou prévu sur la traverse (12), dans lequel une pluralité de dispositifs de gestion de champ différents (18, 19) peuvent être fixés ou montés sur ou dans le système de changement d'outil (W) et, si nécessaire, que sur au moins un bras robotisé (23), un dispositif de gestion de champ (18, 19) est interchangeable avec un autre dispositif de gestion de champ (18, 19), de preference que le système de changement d'outil (W) est fixé à un rail de guidage associé (22) de la traverse (12) et est donc mobile le long de la traverse (12) dans la direction de son extension longitudinale.

6. Dispositif (10; 10') selon l'une des revendications précédentes, **caractérisé par** un dispositif de commande ou de réglage (39) permettant de commander ou de réguler un mouvement de la traverse (12) sur la zone agricole (N) et/ou une activation d'au moins un dispositif de gestion de champ (18, 19), dans lequel, au moyen d'une unité d'émission/réception (36) qui est connectée au dispositif de commande ou de réglage (38) par une technique de signalisation, des informations ou des paquets de données pour la surveillance et / ou le contrôle du fonctionnement de la traverse (12) et / ou des dispositifs de gestion du champ (18, 19) attachés à celle-ci, peuvent être reçus soit d'un endroit éloigné, notamment sous la forme d'un poste de contrôle, et/ou envoyés à un tel endroit éloigné, de préférence que l'unité d'émission/réception (36) est attachée à la traverse (12).

7. Procédé de gestion d'une zone agricole (N), le procédé étant exécuté de manière entièrement automatique et comprenant des étapes de processus de culture végétale associées, depuis l'ensemencement ou le semis des plantes jusqu'à leur récolte, une quantité prédéterminée de produit récolté étant introduite mécaniquement dans une caisse (24) prévue à cet effet au cours de la récolte, dans lequel l'on réalise sur la surface utile agricole (N) une exploitation ponctuelle, dans laquelle une exploitation de la surface utile (N) se concentre uniquement sur des points de plantation ciblés, sur lesquels des plantes sont introduites dans le sol, l'ensemencement des plantes, une irrigation et/ou la récolte des plantes arrivées à maturité ayant lieu sur les points de plantation ciblés,
**caractérisé en ce que**, sur la même zone agricole (N), différents plantes (P) sont semées ou récoltées sous la forme d'une gestion mixte, dans laquelle les processus de gestion et de récolte des plantes sont représentés sous forme de processus pick-and-place et ces processus pick-and-place sont effectués pour toutes les cultures, c'est-à-dire pour différentes espèces et tailles de plantes potagères, dans laquelle lorsque la récolte est apportée au moyen d'un dispositif de gestion de champ (18, 19), la récolte de différents espèces de plantes (P) est rassemblée dans une caisse commune (24).

8. Procédé selon la revendication 7, **caractérisé en ce qu'**il consiste à séparer la biomasse non consommable des plantes à récolter, notamment à l'aide d'un dispositif de gestion de champ (18, 19) d'un dispositif (10; 10') selon l'une des revendications 1 à 6, de préférence **en ce qu'**une séparation de la biomasse non consommable est effectuée à un stade de la plante pendant qu'elle est encore installée dans la zone agricole (N), de préférence encore **en ce qu'**une séparation de la biomasse non consommable est effectuée au cours d'une étape du processus lorsque la plante est sortie du sol lors de la récolte, de préférence encore **en ce qu'**une séparation de la biomasse non consommable est effectuée au cours d'une étape du processus lorsque la plante est sortie du sol lors de la récolte, de préférence encore **en ce qu'**une telle décomposition de plantes et/ou une séparation de biomasse non consommable est assistée par un capteur, de préférence optique, dont est équipé un dispositif de gestion de champ (18, 19) ou un chariot (20) associé d'un dispositif (10; 10') selon l'une des revendications 1 à 6 et avec lequel la plante et sa position et/ou sa taille sont alors détectées.

9. Procédé selon la revendication 7 ou 8, **caractérisé en ce qu'**une zone agricole (N) est cultivée avec différentes variétés de plantes ou de légumes, qui sont choisies dans le groupe constitué par la laitue iceberg, la laitue pommée et la laitue romaine, le chou rouge et le chou blanc, le brocoli, le chou-rave, le céleri, concombre, courgette et/ou courge, de sorte qu'une culture mixte de plantes ou de légumes est réalisée sur la zone agricole (N).

10. Procédé selon l'une des revendications 7 à 9, **caractérisé en ce que** ledit procédé est mis en oeuvre en utilisant un dispositif (10; 10') selon l'une des revendications 1 à 6.

11. Procédé selon l'une des revendications 7 à 10, **caractérisé en ce que** ce procédé est mis en oeuvre à l'aide d'au moins une plateforme (101, 101') qui est mobile par rapport à la zone agricole (N), avec au moins un dispositif de gestion de champ (18; 19) fixé à un châssis (111) de la plateforme (101, 101') ou à une partie de celui-ci, et avec lequel au moins une étape de processus de gestion de plantes est réalisée, un système de transport (125) étant monté sur le châssis (111) de la plateforme (101, 101') ou une partie de celui-ci, avec lequel au moins une caisse (24) est transportée dans la direction longitudinale et/ou transversale du châssis (111) de la plateforme (101, 101') et est ainsi amenée à une position prédéterminée notamment adjacente à un dispositif de gestion de champ (30, 31a, 31b).

12. Procédé selon la revendication 11, **caractérisé en ce que** la plateforme (101, 101') est amenée dans une position adjacente à la traverse (12) du dispositif (10; 10'), de telle sorte que des caisses (24) sont alors soit transférées de la traverse (12) à la plateforme (101, 101'), soit renvoyées de la plateforme (101, 101') à la traverse (12).

13. Système (100) de gestion d'une zone agricole (N), comprenant
un dispositif (10; 10') selon l'une des revendications 1 à 6, qui remplit la fonction d'une station de base sur une zone agricole, et
au moins une plateforme (101, 101') mobile par rapport à la zone agricole (N), qui est prévue séparément du dispositif (10, 10') et qui comporte au moins un dispositif de gestion des champs (18; 19) qui est monté sur un châssis (111) de la plateforme (101, 101') ou sur une partie de celle-ci et avec lequel une étape de processus de culture peut être exécutée,
dans lequel le châssis (111) de la plateforme (101, 101') ou une partie de celle-ci est équipé d'un système de transport (125) capable de transporter au moins une caisse (24), qui peut être déplacée dans la direction longitudinale et/ou transversale du châssis (111), jusqu'à une position prédéterminée, en particulier à proximité d'un dispositif de gestion des champs (18, 19),
dans lequel la plateforme (101, 101') peut être placée dans une position adjacente à la traverse (12) de l'assemblage (10; 10') de telle sorte que la plateforme (101, 101') puisse recevoir des caisses (24) de la traverse (12) ou renvoyer à la traverse (12) de telles caisses (24) qui sont remplies de récoltes de plantes (P) et se trouvent sur la plateforme (101, 101'), et
dans lequel la plateforme fait partie d'un robot de terrain mobile (101), dans lequel plusieurs roues (112) sont prévues sur le châssis (111) de celle-ci pour permettre au robot de terrain (101) de se déplacer sur la zone agricole (N), dans lequel au moins l'une des roues (112) est équipée d'un entraînement, dans lequel au moins une roue (112) est montée sur le châssis (111) de manière à pouvoir pivoter ou tourner autour d'un axe vertical, afin de permettre au robot de terrain mobile (101) de changer sa direction de déplacement.

14. Système (100) selon la revendication 13, **caractérisé en ce que** le châssis (111) de la plateforme (101, 101') est de construction modulaire et comporte à cet effet une pluralité d'éléments enfichables (114) allongés et en particulier de forme tubulaire, ces éléments enfichables (114) pouvant être reliés les uns aux autres en particulier sans utilisation d'un outil spécial et pouvant être détachés les uns des autres de manière à ce qu'au moins une dimension du châssis soit châssis (111) est modifiable.

15. Système (100) selon la revendication 13 ou 14, **caractérisé en ce que**, par rapport à la plateforme (101, 101'), au moins un chariot (20) est monté sur des rails de guidage (22) associés du châssis (111), lequel chariot peut être déplacé le long d'une extension longitudinale de la plateforme (101, 101') de manière mobile sur celle-ci, au moins un dispositif de gestion de champ (18, 19) étant monté sur le chariot (20) et le chariot (20) servant ainsi de porte-outils pour un dispositif de gestion de champ (18, 19).

16. Système (100) selon l'une des revendications 13 à 15, **caractérisé en ce que** le système de transport (125) comporte un dispositif d'entraînement (21) qui peut être amené à interagir avec une caisse (24) pour déplacer ainsi la caisse (24) le long de l'extension longitudinale de la plateforme (101, 101') dans une direction déterminée, dans lequel au moins un chariot (20) déplaçable sur la plateforme (101, 101') est fixé aux rails de guidage (22) associés et sur lequel est prévu le dispositif d'entraînement (21).
